(19)

Europäisches
Patentamt
European
Patent Office
Office européen
des brevets

(11) **EP 2 389 034 B1**

(12) **EUROPEAN PATENT SPECIFICATION**

(45) Date of publication and mention
of the grant of the patent:
**22.05.2013 Bulletin 2013/21**

(51) Int Cl.:
***H04W 36/26*** *(2009.01)*     *H04W 36/14* *(2009.01)*
***H04W 36/16*** *(2009.01)*

(21) Application number: **11156632.9**

(22) Date of filing: **02.03.2011**

(54) **Wireless communication system for controlling qualities of experience, and gateway**

Drahtloses Kommunikationssystem zur Steuerung der Erfahrungsqualitäten und Gateway

Système de communication sans fil pour contrôler les qualités d'expérience, et passerelle

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.05.2010 JP 2010116900**

(43) Date of publication of application:
**23.11.2011 Bulletin 2011/47**

(73) Proprietor: **Hitachi Ltd.
Tokyo 100-8280 (JP)**

(72) Inventors:
• **Hanaoka, Seishi
6-1 Marunouchi 1-chome
Tokyo 100-8220 (JP)**
• **Nakamura, Hitomi
6-1, Marunouchi 1-chome
Tokyo 100-8220 (JP)**

(74) Representative: **MERH-IP
Matias Erny Reichl Hoffmann
Paul-Heyse-Strasse 29
80336 München (DE)**

(56) References cited:
**EP-A2- 0 932 280**     **EP-A2- 1 298 951
WO-A1-2007/032601**

• **JIAN YE ET AL: "A comprehensive resource
management framework for next generation
wireless networks", IEEE TRANSACTIONS ON
MOBILE COMPUTING, IEEE SERVICE CENTER,
LOS ALAMITOS, CA, US, vol. 1, no. 4, 1 October
2002 (2002-10-01) , pages 249-264, XP011095550,
ISSN: 1536-1233, DOI: DOI:10.1109/TMC.
2002.1175539**

**Description**

BACKGROUND OF THE INVENTION

The present invention relates to a technology for switching plural wireless communication systems on the basis of qualities of user experience (QoE) or switching a system between a macrocell and a femtocell.

Various applications have come to be utilized over a wireless system, and the importance of resource control in the wireless system has more and more increased. Therefore, policy control encompassing QoS control through which priorities of resources to be allocated can be determined in line with various applications or users' contract forms has highly attracted attention.

Along with an advancement of investment in facilities for a cellular system or a progress in changing of generations of the cellular system, an increase in a quantity of traffic is accelerated or debuts of various applications are speeded up. A discussion has been made on an idea that a broadband system such as the Worldwide Interoperability for Microwave Access (WiMAX) or a wireless LAN is used as an alternative for the cellular system in some places.

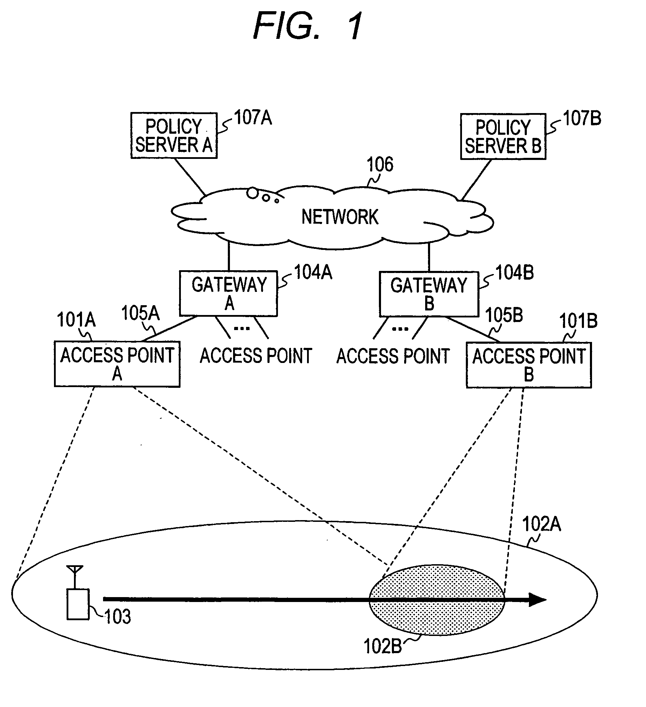

Fig. 1 shows a system configuration for an existing wireless system devised in consideration of the foregoing circumstances.

Fig. 1 shows a network including a wireless system A and a wireless system B. Each of the systems includes access points 101, a gateway 104 that accommodates the access points, and a policy server 107 that manages a policy such as a QoS. The wireless systems A and B are interconnected over a network 106. The 3GPP TS23.402 specification "Architecture Enhancement for non-3GPP accesses" stipulates that the wireless system includes these devices.

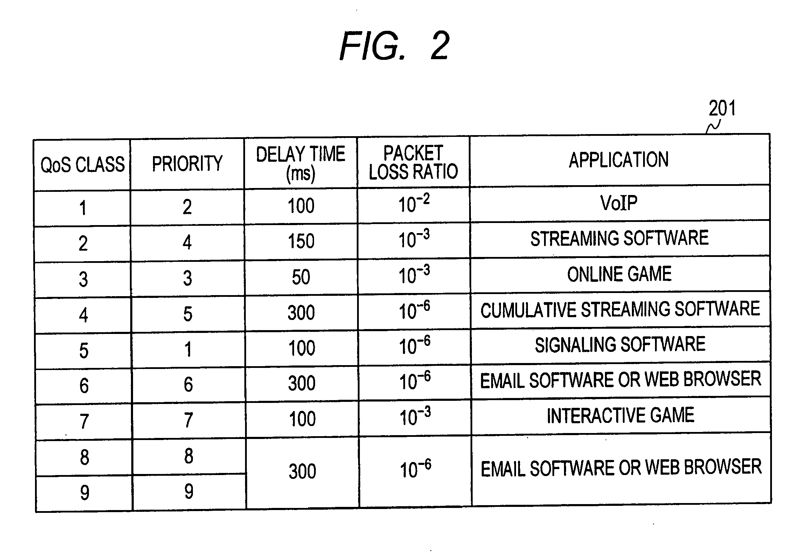

Information to be managed by the policy server includes information concerning a user's contract form and information concerning a QoS. Fig. 2 shows the information on a QoS that is one of the pieces of information. Fig. 2 shows QoS classes adopted by the Long Term Evolution (LTE) and presents as an example those stipulated in the 3GPP TS23.207 specification "End-to-end Quality of Service (QoS) concept and architecture." In the example shown as a table 201 in Fig. 2, various applications are classified into nine QoS classes, and priorities given to the QoS classes are defined. In a wireless system, QoS control is implemented based on the pieces of information managed by the policy server and the pieces of information on the QoS classes. The control is generally called policy and charging control (PCC) by the Third Generation Partnership Project (3GPP).

Along with diversification of applications, there is a possibility that an application which is small in data size and requested to be highly reliable and to little delay, such as, earthquake warning software makes its debut or a possibility that an application which is more mission critical than ordinary data communication software, such as, telemedicine or robot control software to be realized by radio is developed. Namely, various traffics having different characteristics will be transmitted simultaneously over a wireless system. Therefore, improvement of not only a quality of service (QoS) to be provided by the wireless system but also a quality of experience (QoE) will become a significant subject.

As a source control method that notes a QoE, that is, a quality of user experience, a method described in patent document 1 (JP-A-2007-221318) is known. The patent document 1 describes that: a predictive value of the quality of user experience (predictive quality value) obtained after quality control is implemented by rendering a bidirectional video communication service is calculated; a difference between the predictive quality value and a current quality estimate is regarded as a quality improvement value; quality control is implemented by giving priority in descending order of the quality improvement value; and thus the QoE is improved. The patent document 1 presents a graph representing the relationship between a quality of communication, which is indicated with an allocation ratio of resources such as frequency bands or an invalid packet ratio, and the quality of user experience (hereinafter, called a QoE function).

EP 1 298 951 A2 discloses to provide a service with fairness by providing QoS of approximately an equal degree among users of the same service class to keep fairness of the service as well as by maintaining a transmission rate at a predetermined ratio among users of different service classes to relatively keep QoS among service classes. A resource control method which is executed by a base station in a mobile communication between the base station and each of a plurality of mobile stations comprises: an unallocated resource measurement step of measuring an amount of unallocated resources, when one mobile station originates a new connection request or a handover request; a service quality calculation step of calculating a service quality which can be provided to the one mobile station with the amount of the unallocated resource obtained by the measurement; a decision step of deciding whether the service quality obtained by the calculation is within a predetermined range in accordance with a service class to which the one mobile station belongs; and a reassignment step for reassigning the resource to each mobile station depending on the service class to which each mobile station belongs, when the service quality is not within the predetermined range in accordance with the service class to which the one mobile station belongs.

Document WO 2007/032601 A1 discloses a call admission control method for use in a packet based communication system, which can secure a handoff and a quality of service (QoS) by discriminating a new call and a handoff call and borrowing a shared bandwidth, a reserved bandwidth, and a bandwidth of other service according to kinds of services and their characteristics. The call admission control method includes the steps of: a) dividing a frequency band into a reservation band and a shared band for communication service handoff call and multicast service handoff call, and determining whether a call admission request of users is a new call or a handoff call; b) when the call admission request is the new call, determining whether to accept the call admission request by allocating the shared band and a band borrowed from other service; and c) when the call admission request is the handoff call, determining whether to accept the call admission request by allocating the shared band, the reserved band, and the borrowed band according to services and bandwidth resources.

SUMMARY OF THE INVENTION

In a wireless system, policy and charging control (PCC) is implemented based on information managed by a policy server and information on a QoS class. However, a way of associating the QoS class on the basis of information on a user' contract or an application or how to determine a control policy, that is, a concrete control method is not stipulated by the 3GPP. PCC has been discussed by putting emphasis on meeting a QoS to be delivered to a user or on upgrading fairness among users by controlling a frequency band for traffic transferred to or from a specific user. However, PCC does not always serve as control to be implemented from the viewpoint of upgrading the performance of the whole of systems or the performance for all users connected.

Further, a system configuration stipulated in the TS23.402 specification is described as a configuration in which a system conformable to the 3GPP specification is connected to a system unconformable thereto, that is, described to precondition the control stipulated in the 3GPP specification. For causing plural systems to hand over one another while proceeding with a service, it is necessary to cooperate with the wireless system, which is unconformable to the 3GPP specification, in acquiring information on a QoS class or implementing QoS control. However, what kind of control should actually be implemented is not described in practice. Further, no description is made of that when the system conformable to the 3GPP specification and the system unconformable thereto cooperate with each other, what kind of information should be transferred.

For example, assume that a user terminal 103 in Fig. 1 moves from an area covered by a wireless system 102A to an area covered by a wireless system 102B.

The wireless system A shall be a first wireless system (conformable to, for example, the LTE specification) and the user terminal 103 shall exist in the area of the wireless system 102A. In this case, when an application utilized by a user is streaming software, the table 201 included in a policy management server 107A shown in Fig. 1 signifies that the QoS class is class 2 and the priority in QoS control is the fourth priority. Assuming that the wireless system B is a second wireless system different from the first wireless system (for example, a wireless LAN) and a policy server 107B included in the wireless system B grasps only a user's contract form but is not provided with a priority associated with QoS class, when the user moves to the wireless system B, the QoS class is not taken over. This poses a problem in that the quality of user communication may be degraded.

Assuming that the policy server 107B of the wireless system B defines, in addition to users' contract forms, QoS classes different from those specified in the table 201, even if the wireless system B is notified of information on a QoS class, the same QoS class is not always assigned. In addition, QoS control may not be implemented with the same priority given. This poses a problem in that the quality of user communication may be degraded.

Further, when many users have their terminals already connected to the wireless system B and the resource use rate is high, other users may have to reduce resources allocated thereto for the purpose of meeting a QoS to be delivered to a user. When systems are switched from the viewpoint of assuring user's mobility and continuous enjoyment of an application, the situations the other users are confronted with cannot be grasped. When the user switches from the wireless system A to the wireless system B, the QoE characteristic of the whole of the systems may be degraded. Patent document 1 proposes a source control method that notes a QoE. Herein, since control is not implemented in consideration of resources to be allocated to the other users, the qualities of experience to be perceived by the other users may be degraded. Eventually, the QoE of the whole of the systems may be degraded.

An object of the present invention is to control switching of plural systems at the initiative of a network, and sustaining or improving the QoE characteristic of the whole of the systems in consideration of the resource use rates of other systems indicated relative to a frequency band or a delay time.

According to an aspect of the present invention, a wireless communication system according to claim 1 and a gateway according to claim 11 are provided.

When a certain user terminal exists over a first wireless system, the sum of QoE values for sessions is calculated by each of gateways included in the first wireless system and a second wireless system. The sum of QoE values for sessions obtained when the user terminal exists over the second wireless system is calculated by each of the gateways included in the first wireless system and second wireless system. Based on which of the former and latter sums is larger, whether the connecting-destination system of the user terminal should be switched between the wireless systems is decided.

Along with a user's movement, the quality of user experience can be sustained or improved by switching plural systems. Further, the whole of the wireless systems can meet qualities of experience desired by a larger number of users.

BRIEF DESCRIPTION OF THE DRAWINGS

Fig. 1 is a diagram showing an existing system configuration;
Fig. 2 is a diagram showing a table that specifies QoS classes;
Fig. 3 is a diagram showing a system configuration in accordance with the present invention (first embodiment);
Fig. 4 is a diagram describing a control flow in accordance with the present invention (when a terminal makes a movement);
Fig. 5 is a diagram showing a control flow in accordance with the present invention (when resources are reallocated for improving qualities of experience);
Fig. 6 is a flowchart describing a QoE control flow implemented in a gateway according to the present invention;
Fig. 7 is a diagram showing examples of QoE functions in accordance with the present invention;
Fig. 8 is a diagram showing QoE control in accordance with the present invention;
Fig. 9 is a diagram showing a QoE database employed in the present invention;
Fig. 10 is a diagram showing a common interface employed in the present invention;
Fig. 11 is a diagram showing plural interfaces employed in the present invention;
Fig. 12 is a diagram showing a system configuration in accordance with the present invention (second embodiment);
Fig. 13 is a diagram showing a system configuration in accordance with the present invention (third embodiment);
Fig. 14 is a diagram describing a control flow in accordance with the present invention;
Fig. 15 is a diagram showing an incentive database employed in the present invention; and
Fig. 16 is a diagram showing an example of a QoE matching method employed in the present invention.

DESCRIPTION OF THE PREFERRED EMBODIMENTS

A first embodiment of the present invention will be described below.

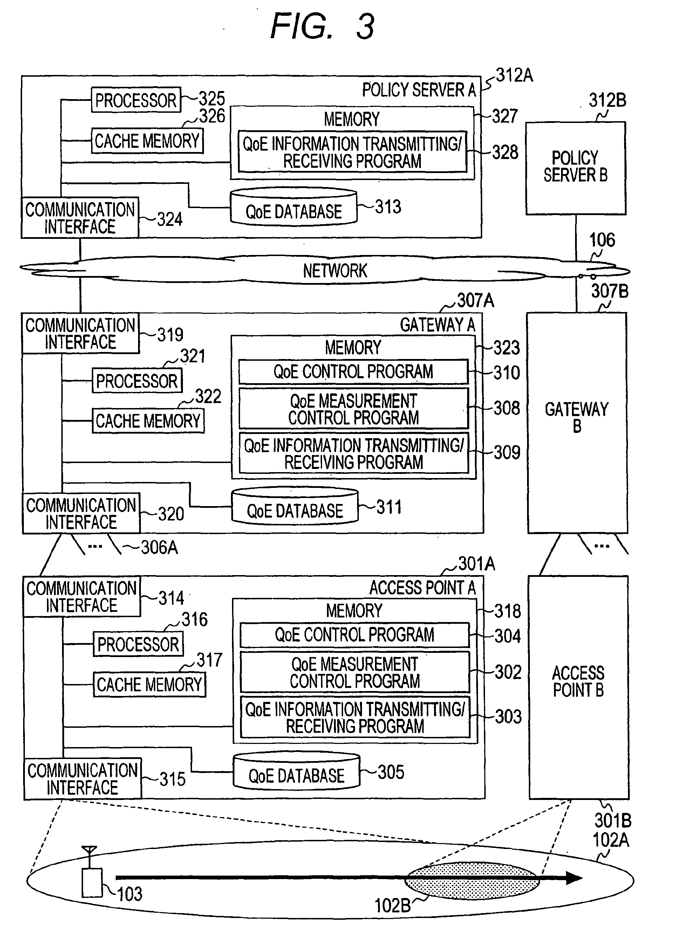

Fig. 3 shows a system configuration of the first embodiment. In Fig. 3, functional blocks newly required for the present invention are noted and shown, but facilities an existing wireless system already has (for example, those shown in Fig. 1) are not shown.

An access point 301 in the first embodiment has a communication interface 315 for use in communicating with terminals, and a communication interface 314 for use in communicating with a gateway 307. In addition, the access point includes a processor 316 that handles traffic in the access point and implements control relevant to call processing, a cache memory 317, a memory 318, and a database 305 in which pieces of information on qualities of experience is preserved.

The access point 301 runs a QoE measurement control program 302, which is stored in the memory 318, so as to measure a quality of user experience perceived by each user for traffic communication. The QoE measurement control program 302 measures a current transmission speed and a delay time on the basis of the number of packets received via the communication interface 314 and arrival times of the received packets, and collates pieces of information on the transmission speed, delay time, and others with pieces of information, into which the relationship among the transmission speed, delay time, and a QoE value is mapped and which are stored in the QoE database 305, so as to measure the value of a QoE each user perceives for an application the user enjoys. Otherwise, the current transmission speed and delay time are measured based on the number of packets transmitted via the communication interface 315 and transmitting times of transmitted packets. Pieces of information on the transmission speed, delay time, and others are collated with pieces of information, into which the relationship among the transmission speed, delay time, and QoE value is mapped and which are stored in the QoE database 305, in order to measure the QoE value.

The QoE measurement control program may merely measure pieces of information on a current transmission speed delay time, and others which are necessary to calculate a QoE value, according to the method described above, but may not collate the measured pieces of information with pieces of information stored in the access point.

In addition, the access point 301 includes a QoE information transmitting/receiving program 303 that notifies a gateway of pieces of measured QoE information via the communication interface 314, or receives pieces of information such as an QoE value, which is obtained from any other user, from the gateway. The pieces of QoE information concerning each user are stored in the QoE database 305 through processing performed by the processor 316.

In addition, the access point 301 includes a QoE control program 304 that implements control to increase a QoE value for an application which each of users accommodated by the access point is using. The QoE control program has the capability to decide in response to a notification sent from the gateway 307A whether a user who moves from a communication area other than the one of the wireless system A or a user who requests switching from another wireless system can be accommodated by the access point 301A. If the user can be accommodated, the QoE control program can control how to allocate a resource to each user.

Further, in order to implement the above controls, the access point includes the QoE database 305 in which the current situations of a resource (for example, a transmission speed, a delay time, a jitter, information on a QoS class, information on a user's contract, an access point use rate, and a load on an access point) and a QoE value are preserved in relation to each user or each session.

The gateway 307 includes a communication interface 320 for use in communicating with the access point 301, and a communication interface 319 for use in communicating with a network 106. In addition, the gateway includes a processor 321 that handles traffic within the gateway or implements control relevant to call processing, a cache memory 322, a memory 323, and a database 311 in which pieces of QoE information are held.

The gateway 307 includes a QoE measurement program 308 that measures a quality of user experience which each user perceives for traffic communication. The QoE measurement program 308 of the gateway has two capabilities. The first one of the capabilities is to calculate the sum of QoE values obtained from plural users, and measure a QoE value of the entire wireless system including access points subordinate to the gateway. As for the second capability, when an access point does not calculate a QoE value but pieces of information concerning a resource, that is pieces of information on a frequency band (transmission speed), a delay time, and others are posted from the access point, the gateway collates the pieces of information concerning the resource, that is, the pieces of information on the receiving frequency band, delay time, and others with pieces of information, into which the relationship among the transmission speed, delay time, and QoE value is mapped and which are stored in the QoE database 311, so as to calculate the QoE value.

In addition, the gateway 307 includes a QoE information transmitting/receiving program 309 that notifies the access point of the pieces of measured QoE information, transmits pieces of information including a QoE perceived by another user to the access point, or receives a request, which is made from a certain user who may switch systems by reason of movement or the like, from another wireless system.

In addition, the gateway 307 includes a QoE control program 310 that implements control to increase a QoE on the basis of a result of QoE measurement that involves plural users accommodated by the gateway 307. The QoE control program decides in response to a notification from a gateway included in another wireless system whether a user who moves or a user who requests switching of systems can be accommodated by the own system. If the user can be accommodated, the QoE control program controls how to allocate a resource to each user.

In order to implement the foregoing controls, the gateway includes a QoE database 311 in which the current situations of a resource (for example, a transmission speed, a delay time, a jitter, information on a QoS class, information on a user's contract, a system use rate, and a load on the system) and a QoE value are held in relation to each user or each session.

A policy server 312 includes a communication interface 324 for use in communicating with a device on the side of a network, such as, the gateway 307, and also includes a processor 325 that handles a QoE database therein, a cache memory 326, a memory 327, and a database 313 in which pieces of QoE information are held.

The policy server 312 includes the database 313 in which a QoE characteristic of an application defined with a frequency band and a delay time is held in relation to each of applications. A QoE information transmitting/receiving program 328 is used to transfer information retrieved from the database to a gateway or an access point via the communication interface 324. Thus, the information is shared with the gateway or access point.

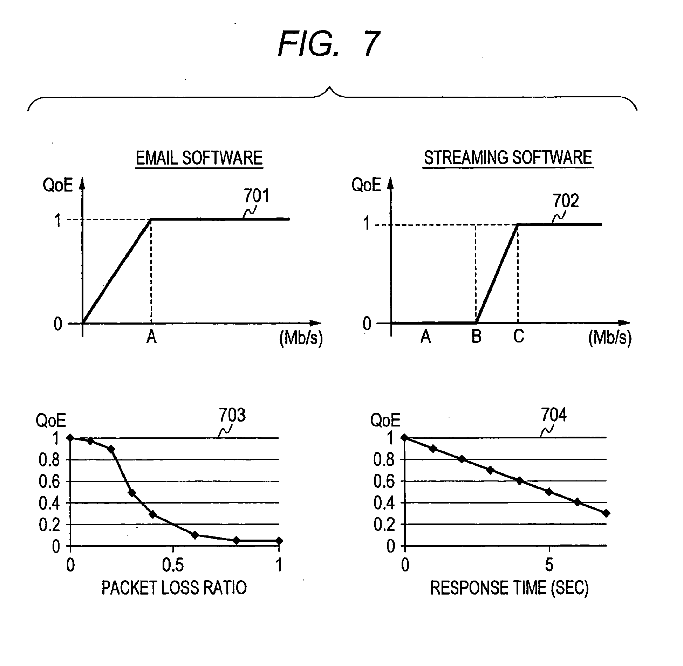

Referring to Fig. 7, a QoE will be described below. The QoE is a quality of user experience to be perceived at a user terminal. When each application is utilized, the QoE is defined as a quality of user experience. The QoE varies depending on a throughput (transmission speed) for an application the user utilizes, a fluctuation in the throughput, a packet delay time caused by the application the user utilizes, a fluctuation in the delay time, and other various factors. The quality of user experience is a subjective assessment value. A mean opinion score (MOS) used to assess the quality of communication such as telephone connections is well known. For adaptation to various applications, a description will be made of the relationship between the throughput (frequency band), which has a direct relationship to the performance of a wireless system, and the QoE. In general, when the throughput is higher, the QoE is higher. When an application that requires a small storage capacity, such as, email software 701 is employed, a certain throughput (A (Mb/s) in Fig. 7) should be ensured. Even if the throughput is raised, since the user does not perceive the fact that the throughput is high, the quality of experience does not vary. In contrast, assume that streaming software 702 that requires a larger storage capacity than the email software does and handles a motion picture is employed. Even when a frequency band larger than a frequency band providing the throughput A (Mb/s) and permitting the email software to meet a QoE is ensured, if a throughput falls below B (Mb/s), the quality of experience is quite poor. Unless a certain frequency band (providing a throughput C (Mb/s)) is ensured, a high quality of experience is not expected. Reference numerals 701 and 702 denote graphs qualitatively indicating the relationship between the quality of experience and throughput. The QoE varies depending on an application and takes on a value dependent on a throughput (or a frequency band allocated to the application).

Incidentally, the QoE is not determined with a frequency band alone. The lower a packet loss ratio is, the higher the QoE is. The QoE can be said to be a function of the packet loss ratio (703). In addition, the shorter a delay time required to respond a request sent from a user terminal during web browsing or email receiving is, the larger the Qoe value is. Therefore, the QoE can be said to be a function of the delay time (704). As far as an application that is highly real-time, such as, streaming software is concerned, if not only the delay time in arrival of a packet but also a fluctuation (variance) in the delay time is large, it becomes hard to comfortably view a motion picture or the like. Therefore, the QoE can be said to be a function of the fluctuation in the delay time.

Therefore, the QoE is calculated based on an expression below by combining any of the foregoing various QoE functions according to an application to be employed.

$$\text{Quantity of user experience} =$$

$$\alpha \times f(\text{QoE}(\text{frequency band})) + \beta \times f(\text{QoE}(\text{packet loss ratio})$$

$$+ \gamma \times f(\text{QoE}(\text{delay time}) + \cdots \qquad (2)$$

f (QoE (parameter name)) denotes a QoE function representing the relationship of a QoE value to each of parameters shown in graphs 701 to 704 respectively. $\alpha$, $\beta$, $\gamma$, etc. denote weighting coefficients to be applied to the respective elements. The expression (2) signifies an example of calculation of a quantity of user experience using a combination of three parameters. Otherwise, QoE functions may be defined using as parameters the aforesaid fluctuation in a delay time and a variation in an allocated frequency band respectively, and used to calculate the quantity of user experience.

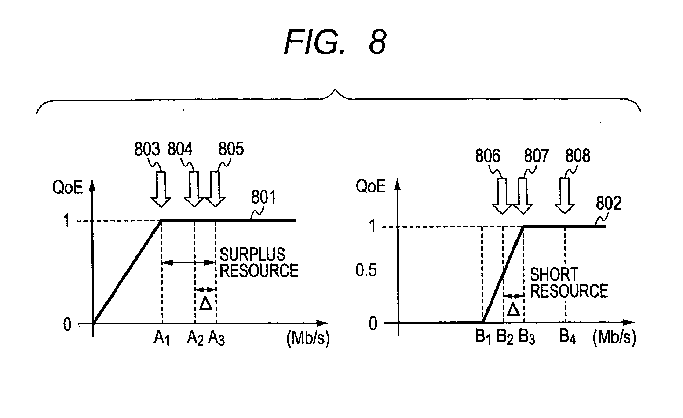

Fig. 8 is a diagram showing a concept of resource control based on a QoE. Referring to Fig. 8, a concept of QoE control in accordance with the present invention will be described below.

A resource that provides a throughput A3 shall be allocated to communication on an application characterized by a graph on the left side of Fig. 8, and a resource that provides a throughput B2 shall be allocated to communication on an application characterized by a graph on the right side of Fig. 8. In this case, for the application on the left side of Fig. 8, a difference from a resource providing a throughput A1 and meeting a QoE of 1.0 can be regarded as a surplus resource. Even when a resource allocated to communication on the application on the left side of Fig. 8 is reduced by a magnitude associated with the difference A3-A1 (Mb/s), the quality of experience for the application does not vary. In contrast, as for the application on the right side of Fig. 8, a resource providing a throughput B2 (Mb/s) ensures a QoE of 1.0 or less. Therefore, the resource allocated to the application used according to the graph on the left side is reduced by a magnitude associated with a difference $\Delta$ (A3-A2), and a resource associated with a difference $\Delta$ (B3-B2) is additionally allocated to communication of the application used according to the graph on the right side. Thus, for communication of the application used according to the graph on the right side, a resource providing a throughput B3 can be ensured. The QoE for the communication on the application used according to the graph on the right side becomes 1.0. Therefore, the qualities of experience desired for both the applications are met. Eventually, the qualities of experience perceived by plural users can be improved.

When a quality of user experience is calculated according to the expression (2), if the resource $\Delta$ has to be released, the resource is first released in relation to an element of a QoE function to the smallest weighting coefficient is applied. Thus, an adverse effect on the quality of user experience can be alleviated. For additionally allocating the resource $\Delta$, the resource is first allocated in relation to an element of a QoE function to which the largest weighting coefficient. Thus, the quality of user experience can be shortly improved. Needless to say, a resource may be equally released or allocated in relation to the elements of the respective QoE functions, so that the resource $\Delta$ can be released or allocated for the user concerned.

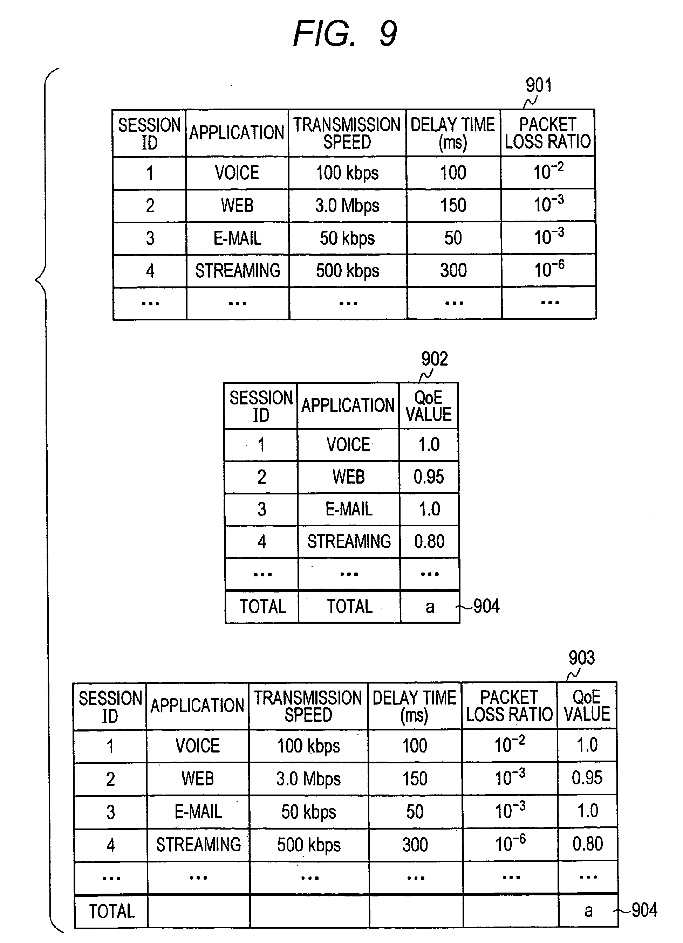

The QoE value is allocated session by session in response to activation of an application a user utilizes. The QoE database is therefore structured as shown in Fig. 9. A transmission speed, a delay time, and a packet loss ratio specified in a table 901 are a transmission speed, a delay time, and a packet loss ratio respectively measured by the access point 301 during each session. A table 902 specifies QoE values calculated by assigning the values in the table 901, which are obtained by the access point, to the respective functions included in the expression (2).

An access point may not calculate any QoE value, but may measure pieces of information concerning a frequency band and a delay time which relate to a QoE. A gateway may acquire the pieces of information from the access point. A QoE for an application each user utilizes may be calculated based on the pieces of information. In this case, the pieces of information in the table 901 may be stored in the QoE database 305 included in the access point, and the QoE values alone in the table 902 may be stored in the QoE database 311 included in the gateway.

Another conceivable method is such that pieces of information on a frequency band, a delay time, and others which are associated with QoE values, are, as shown as a table 903 in Fig. 9, stored together with the QoE values in either or both of the access point and gateway. The pieces of information shown in Fig. 9 are stored in association with a session ID every time a session is established. The QoE database of the gateway holds the QoE value for each session established by the subordinate access point.

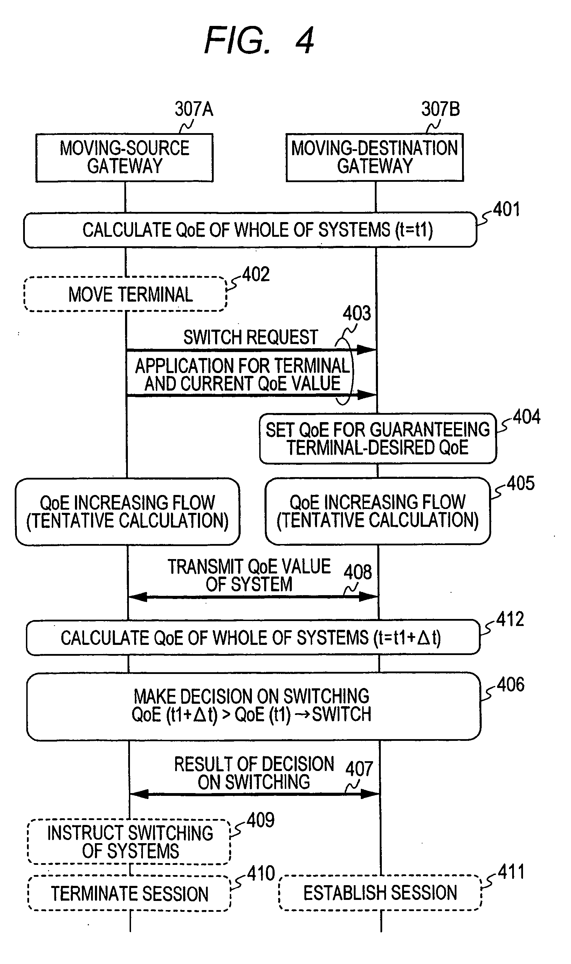

Fig. 4 shows a control flow to be implemented in the system configuration shown in Fig. 3. First, at step 401, the QoE measurement programs 308 residing in the gateways 307 included in the wireless system A and wireless system B respectively calculate a QoE value provided by the whole of the systems (a sum of QoE values calculated for respective sessions established in the systems). More particularly, the QoE measurement programs 308 calculate a sum 904 by adding up QoE values calculated for respective sessions and specified in the table 902 in Fig. 9. Instead of the sum, a mean QoE value may be calculated by dividing the sum by the number of sessions. At this time, when the terminal 103 moves to a system of a moving destination, if the terminal senses a decrease in radio-wave intensity or the like, the terminal requests switching to another system (402). At step 403, using the QoE information transmitting/receiving program 309, the gateway 307A that is a moving source notifies the gateway 307B, which is the moving destination, via the communication interfaces 319A and 319B of information on an application the user terminal 103 currently uses, a session ID of a session which the user terminal has established, and a QoE value. The notification may be transmitted at a time while being contained in a switching request, or may be transmitted as a message other than the switching request.

In the system of the moving destination, the QoE control program 310B of the gateway 307B tentatively sets a QoE so as to guarantee a QoE desired by the terminal for the purpose of retaining the quality of communication on the application which the user terminal 103 uses at the moving source 404. More particularly, at step 403, the QoE control program of the moving-destination gateway specifies the session ID, QoE value, and information on the application, which are received from the moving-source gateway, in the table 902 in the QoE database shown in Fig. 9. In contrast, the QoE control program of the moving-source gateway transmits the session ID, QoE value, and information on the application to the moving-destination gateway, and thus deletes the QoE value from an entry of the table 902 in the QoE database.

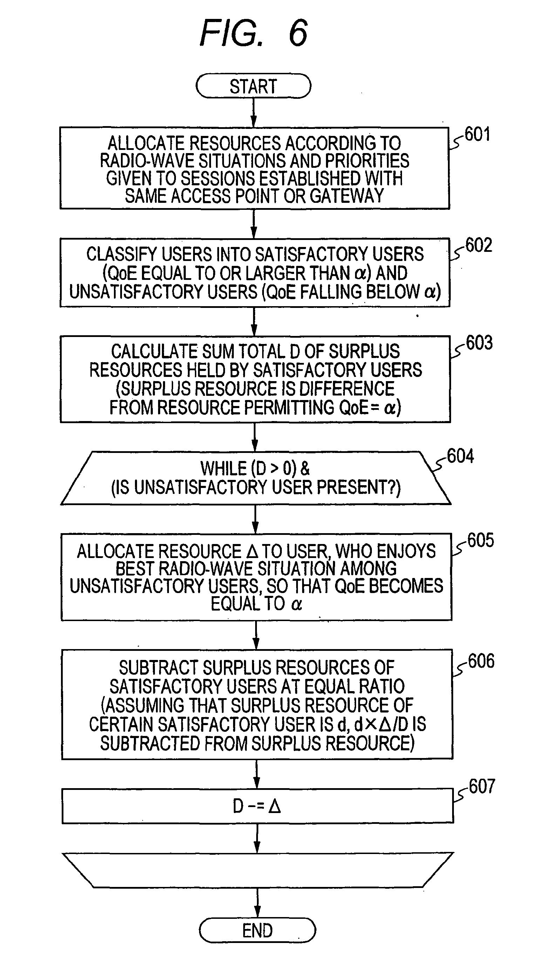

Thereafter, at step 405, each of the QoE control programs 310A and 310B residing in the gateways 307A and 307B of the respective systems tentatively calculates a QoE value for each session. The reason why the QoE value is tentatively calculated is that since the number of persons to be accommodated by each of the wireless system varies along with a movement of the terminal, a ratio for resource allocation varies. Therefore, the QoE value has to be tentatively calculated. The tentative calculation (QoE increasing flow) will be described later in conjunction with Fig. 6. Each of the QoE control programs 310A and 310B of the gateways 307A and 307B adds up QoE values for respective sessions calculated at step 405, and thus recalculates a QoE value provided by the whole of the entire wireless systems A and B (a sum of the QoE values for the respective sessions) (412).

Further, each of the QoE control programs 310A and 310B of the gateways 307A and 307B cooperates with the QoE information transmitting/receiving program 309A or 309B in transmitting the recalculated sum concerning the whole of the systems to the other system via the communication interface 319 (408). The transmission of the information may be unidirectional from a moving-source system to a moving-destination system or unidirectional from the moving-destination system to the moving-source system, or may be bidirectional from the gateways to the gateways of the other systems. The gateway having received the information transmitted at step 408 decides at step 406 whether the QoE value of the whole of the systems is improved by switching the connecting-destination system of the user terminal 103 from one system to another. Incidentally, if the sum is transmitted unidirectionally from the moving-source gateway to the moving-destination gateway, the QoE control program 310B of the moving-destination gateway 307B makes a decision. If the sum is unidirectionally transmitted from the moving-destination gateway to the moving-source gateway, the QoE control program 310A of the moving-source gateway 307A makes a decision. If the QoE sum is bi-directionally transmitted to the other systems, the QoE control program 310 of one of the gateways 307 makes a decision.

For example, assuming that the sum is unidirectionally transmitted from a moving-source gateway to a moving-destination gateway, if the QoE control program 310B of the gateway 307B decides at step 406 that when the connecting-destination system of the user terminal 103 is switched from one system to another, the QoE values provided by the moving-destination system and moving-source system improve more greatly than when the connecting-destination system is not switched, the QoE control program 310B of the gateway 307B notifies at step 407 the gateway 307A via the communication interface 319B of the fact that the systems can be switched. More particularly, the value (t=t1) calculated at step 401 by adding up the sum of qualities of experience offered by the wireless system A for respective sessions and the sum of qualities of experience offered by the wireless system B for the respective sessions is compared with the value (t=t1+Δt) calculated at step 412 by adding up the sum of qualities of experience offered by the wireless system A for respective sessions and the sum of qualities of experience offered by the wireless system B for the respective sessions. If a result of the comparison demonstrates that the latter value is larger than the former value, a decision is made that the connecting-destination system of the user terminal 103 is switched from one system to another. In contrast, if the latter value is smaller than the former value, a decision is made that the connecting-destination system of the user terminal 103 is not switched from one system to another. Thereafter, the other system is notified of the result of the decision (407).

By the way, assuming that the sum of qualities of experience is transmitted from a moving-destination gateway to a moving-source gateway, if the QoE control program 310A of the gateway 307A decides at step 406 that when the connecting-destination system of the user terminal 103 is switched from one system to another, the QoE values of the moving-destination system and moving-source system improve more greatly than they do when the connecting-destination system thereof is not switched, the QoE control program 310A of the gateway 307A notifies the gateway 307B via the communication interface 319A of the fact that the systems can be switched.

If switching the systems is determined, the gateway 307A instructs the terminal 103 to switch the systems (409). The terminal terminates the session established with the moving-source system (410), and establishes a session with the moving-destination system (411). As for a session establishment method, a session establishment method employed in an ordinary wireless system may be adopted. An iterative description will be omitted.

As mentioned above, if qualities of experience of systems improve, the connecting-destination system of a user terminal is switched from one system to another. If the QoEs of the systems do not improve, the connecting-destination system is not switched from one system to another. In the example described in Fig. 4, the movement of the terminal serves as a trigger for QoE control. The trigger may be any other matter.

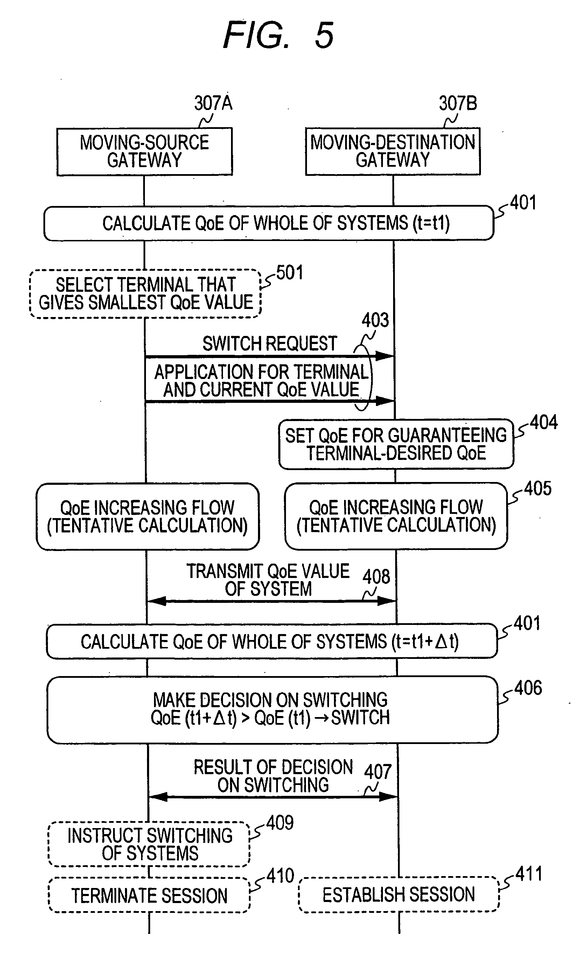

Fig. 5 shows an example in which another trigger is used for QoE control. In order to improve qualities of experience perceived by plural users having their terminals connected to plural systems, the terminals are sequentially rescued in ascending order of a QoE value obtained at a terminal. Thus, the QoE of the whole of the systems can be improved. Similar to step 501 in Fig. 5, a terminal at which the smallest QoE value is obtained is selected, and the user switches systems into the other wireless system with the selection as a trigger. Whether the QoE can be improved is then computed. According to the method in which the terminal at which the smallest QoE value is obtained is selected at step 501, the QoE control program 310A installed in the gateway 307A references the QoE database 311, retrieves a session ID associated with the smallest QoE value from the table 902 or 903, and identifies the user terminal, which is communicating, using the session ID. A procedure of calculations succeeding step 501 is identical to that described in Fig. 4. The QoE control program 310 installed in the gateway 307 decides whether the QoE of the whole of the systems can be expected to improve (406). If the QoE is expected to improve, the QoE control program prompts the user to switch the systems (407).

Referring to Fig. 6, a description will be made of a control facility included in the QoE control program for allocating resources such as frequency bands to plural users so that the sum of QoE values of wireless systems becomes maximum. First, resources equal to or lower than a resource, which provides the maximum transmission speed determined with a distance decay or the like dependent on a distance between an access point and a terminal, are allocated through control of priorities given to plural users or lines connected to the access point. Therefore, each of the wireless systems allocates the resources according to a radio-wave situation at step 601. Thereafter, at step 602, based on the allocated resources (pieces of information on frequency bands, delay times, and others) and the QoE functions described in conjunction with Fig. 7, sessions are classified into those for which QoE values equal to or larger than k are obtained (which shall be called satisfactory sessions), and those for which QoE values falling below k are obtained (which shall be called unsatisfactory sessions). A state in which a resource making a QoE equal to k is allocated refers to a state in which a user using the session perceives a sufficiently high quality of user experience.

More particularly, the QoE control program of the gateway assigns values of pieces of information, which are contained in the table 901 shown in Fig. 9 (pieces of information on a frequency band allocated to each session established with an access point subordinate to the gateway, a delay time, and others), to the expression (2), and thus calculates a QoE value, which is contained in the table 902, for each session established with the access point subordinate to the gateway. If the calculated QoE value falls below k, the session concerned is classified as an unsatisfactory session. If the calculated QoE value is equal to or larger than k, the session concerned is classified as a satisfactory session.

At step 603, the sum total of surplus resources held for satisfactory sessions is calculated. What is referred to as the surplus resource is a value that when a QoE equals k, is obtained by subtracting a minimum resource, which should be allocated to a session, from a resource, which is currently allocated to a satisfactory session.

More particularly, assume that a resource 805 providing a throughput A3 (Mb/s) is allocated to a session, which is established on an application characterized by a graph on the left side of Fig. 8, is used at a user terminal at step 601. In addition, assume that k equals 1.0. Since a resource meeting k=1.0 is a resource 803 providing a throughput A1 (Mb/s), a resource associated with a difference of A3-A1 (Mb/s) is regarded as a surplus resource for the session established by the user terminal. The resource making a QoE equal to k is calculated according to the expression (2), and the calculated value is subtracted from a resource allocated at step 602. The calculation of the surplus resource is performed relative to sessions of all users having their terminals connected to the same system. The sum of the surplus resources for the respective sessions established by all the user terminals is calculated. Thus, the sum total D of the surplus resources is calculated.

As long as the condition that a QoE is equal to or larger than k is met, a certain level is cleared in terms of a quality of user experience. When a resource equal to or higher than a minimum resource to be allocated when the QoE equals k is allocated, an attempt is made to allocate a surplus resource to another session. Thus, the total sum of resources capable of being allocated to unsatisfactory sessions without a decrease in qualities of experience for satisfactory sessions is calculated.

At step 604, if a surplus resource is available in the system (that is, a D value is positive) and an unsatisfactory session is present, the surplus resource is allocated to the unsatisfactory session so that a QoE becomes equal to k. Eventually, the unsatisfactory session is changed to a satisfactory session (605 and 606).

Using the example shown in Fig. 8, a description will be made on the assumption that k equals 1.0. If a resource 805 providing a throughput B2 (Mb/s) is allocated to a session, which is established at a user terminal using an application to be employed according to the graph on the right side of Fig. 8, at step 601, since a QoE is smaller than 1, the QoE control program classifies the session as an unsatisfactory session at step 602. If a surplus resource D calculated at step 602 is larger than 0 and the session classified as the unsatisfactory session at step 602 is still present (604), step 605 is executed. At step 605, the QoE control program selects a session, which is established in the best radio-wave situation, from among all unsatisfactory sessions. Assume that a session characterized by the graph on the right side of Fig. 8 is selected. Thereafter, the QoE control program additionally allocates a resource, which provides a throughput $\Delta$ (=B3-B2), to the selected session. When the session (expression (2)) is characterized by the graph on the right side of Fig. 8, the QoE control program calculates a minimal resource which makes a QoE equal to k, subtracts a resource, which is allocated to a current session, from the calculated resource value, and thus calculates a resource associated with the difference $\Delta$.

For a session of communication on an application to be used according to the graph on the right side of Fig. 8, a resource providing a throughput B3 (Mb/s) can be preserved. The QoE value for the session of communication on the application to be used according to the graph on the right side of Fig. 8 becomes 1.0. Herein, since a surplus resource is adopted as the resource associated with the difference $\Delta$, the QoE value for a satisfactory session does not decrease.

Since a resource is allocated by a magnitude associated with the difference $\Delta$ to the user terminal that uses the application characterized by the graph on the right side of Fig. 8, surplus resources that come to the magnitude associated with the difference $\Delta$ have to be subtracted from resources allocated to other user terminals. At this time, the surplus resources are equally reduced from the resources allocated to the other users. Therefore, at step 606, a resource that is allocated to an application to be used according to the graph on the left side of Fig. 8 and that provides a throughput A3 (Mb/s) is reduced by (A3-A1) x$\Delta$/D. If the surplus resource can be acquired from the user who perceives a quality of experience expressed by the graph on the left side of Fig. 8, A3-A1=D becomes true. Therefore, at step 606, the resource allocated to the user of the application on the left side of Fig. 8 is reduced by (A3-A1) x $\Delta$/D=$\Delta$ so that the resource takes on a value associated with a throughput A2 (Mb/s).

The steps 604 to 607 are repeated until the sum total D of surplus resources is minimized. As long as a difference obtained by subtracting the sum of surplus resources reduced at step 606 from the sum total D of surplus resources calculated at step 603 takes on a positive value, the step 605 is executed. At step 606, if the difference obtained by subtracting the sum of the surplus resources reduced at step 606 and a surplus resource to be reduced this time from the sum total D of surplus resources calculated at step 603 takes on a negative value, allocation of the resource to an unsatisfactory session made at step 605 is canceled. The surplus resources present in all systems are reduced in order to increase the number of satisfying users. Thus, the sum of qualities of experience for respective sessions can be maximized, and the QoE of the whole of the wireless systems can be improved.

In another mode of introducing QoE control over systems, a system that exhibits a high probability of meeting a QoE is selected. Using a maximum throughput provided by a resource capable of being allocated depending on a user's wireless environment
t, and a throughput necessary to meet a QoE of 1.0 for an application, an expression (1) below is applied to each wireless system.

$$\sum_{n=1}^{k} \frac{BWassigned(n)}{BWrequired(n)} \qquad (1)$$

BWassigned denotes a maximum throughput provided by a resource capable of being allocated depending on a user's wireless environment, and BWrequired denotes a throughput necessary to meet a QoE of 1.0 for an application used by the user. A required frequency band specified in the denominator is averaged in consideration of presence of various users. As for the maximum throughput specified in the numerator, there is a high possibility that many resources supported by a system may be used to provide the maximum throughput. Therefore, when the expression (1) is applied to each wiring system, which of the systems exhibits a possibility of using many resources can be estimated. Connection to a wireless system that provides a small sum according to the expression (1) is thought to raise the possibility of meeting a QoE desired by a moving user. Therefore, the wireless system is selected.

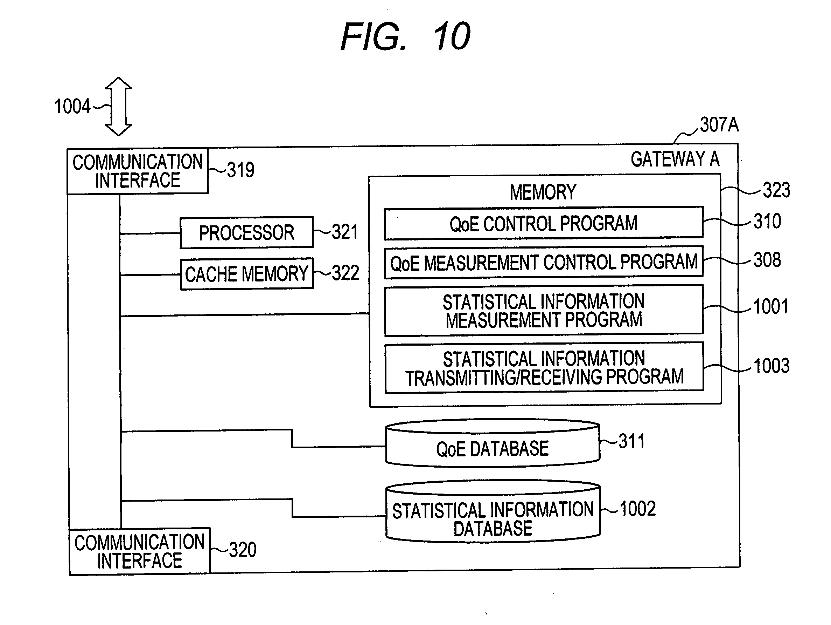

Next, a description will be made of interfaces on the assumption that pieces of information on a QoE are transferred between an access point and a gateway or transferred between the gateways included in the wireless systems A and B respectively. Each of devices included in a wireless system has an interface via which various pieces of information including information on an operating situation of the device and pieces of information on other wireless parameters are stored or posted to a device that monitors or manages the pieces of information. Fig. 10 shows a relationship of connections of facilities incorporated in a gateway. A facility 1001 that measures pieces of statistical information other than a QoE already resides. In addition, a statistical information database 1002 containing the pieces of statistical information, and a transmitting/receiving program 1003 that posts the pieces of statistical information to the device responsible for monitoring and management are included. An existing specified protocol 1004 is used to transmit or receive the pieces of information. A program 1003 that transmits or receives the pieces of statistical information is used to post or receive the pieces of information on a QoE.

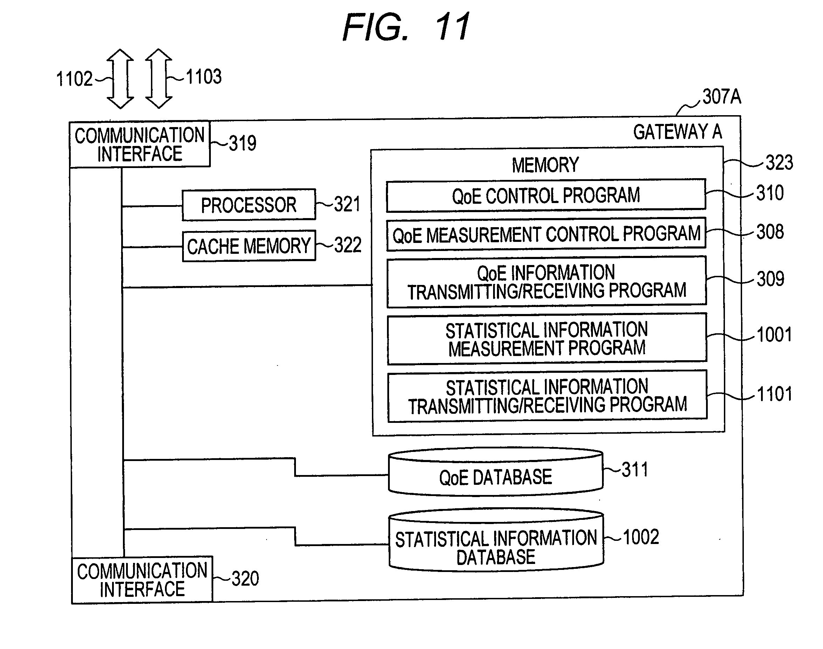

Otherwise, as shown in Fig. 11, consideration may be taken into the fact that transmitting/receiving of pieces of information on a QoE is more frequently performed than transmitting/receiving of other pieces of statistical information, and the QoE information transmitting/receiving program 309 other than a statistical information transmitting/receiving program 1101 may be employed. At this time, two interfaces 1102 and 1103 are employed. The employment of two interfaces may be understood to mean use of physically different interfaces. Alternatively, it may be interpreted as that physically identical communication interfaces 319 are used to transmit or receive information under different protocols. For example, the interface 1102 may be installed in conformity with the Simple Network Management Protocol SMNP, while the interface 1103 may be installed in conformity with the Network Configuration protocol NETCONF.

The examples shown in Fig. 10 and Fig. 11 have been described by taking a gateway for instance. The same applies to an access point.

A second embodiment of the present invention will be described below.

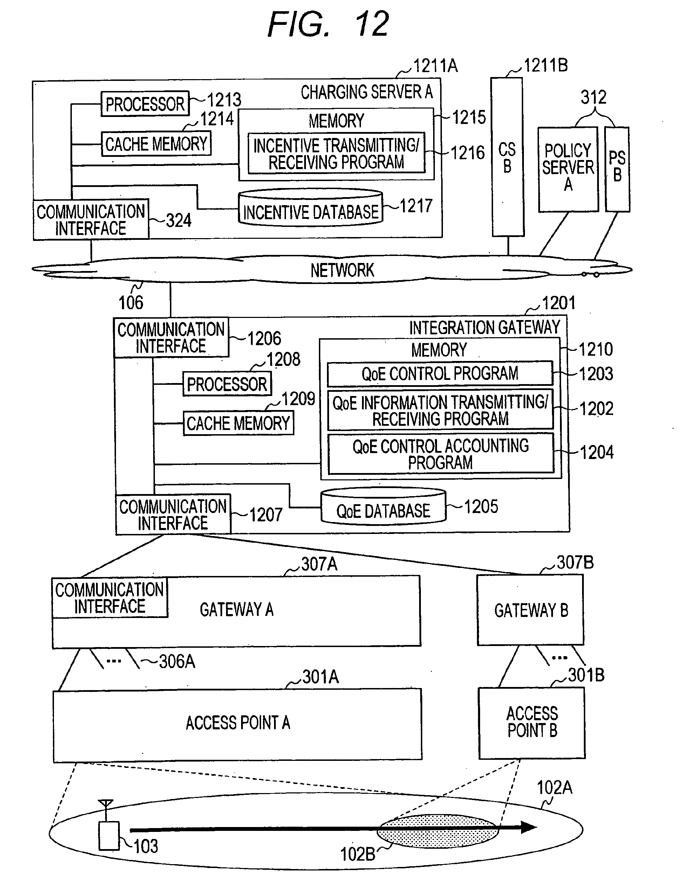

Fig. 12 shows a system configuration in accordance with the second embodiment. The present embodiment is characterized in that gateways included in a wireless system A and a wireless system B respectively are not interconnected over a network, but are interconnected via a gateway 1201 that integrates plural systems.

In the present embodiment, the integration gateway 1201 implements the control for increasing a QoE described in conjunction with Fig. 4, Fig. 5, and Fig. 6. The integration gateway 1201 has a communication interface 1207 for use in communicating with a gateway 307 of a wireless system, and a communication interface 1206 for use in communicating with a network 106. In addition, the integration gateway includes a processor 1208 that handles traffic in the integration gateway, and implements control relevant to call processing, a cache memory 1209, a memory 1210, and a database 1205 that holds pieces of information on a QoE. The pieces of information on a QoE and other pieces of information to be acquired are identical to those of the first embodiment described in conjunction with Fig. 9.

When a mobile virtual network operator (MVNO) controls plural systems included in the foregoing system configuration, resources are released from or allocated to plural wireless systems in order to improve qualities of experience. Therefore, an accounting processing program 1204 is added for arbitration work. Specifically, in the example shown in Fig. 8, resources associated with the difference Δ are transferred. Assuming that the graph on the left side of Fig. 8 characterizes a wireless system A and the graph on the right side thereof characterizes a wireless system B, when the wireless system A provides the wireless system B with the resources associated with the difference Δ, qualities of experience perceived by users of the wireless system B improve. Therefore, a mechanism is included for allowing the wireless system A to receive an incentive, which is equivalent to improvement in the qualities of experience, from the wireless system B.

A case where the MVNO installs the integration gateway 1201 and operates the systems will be taken for instance. The MVNO implements QoE control by running the QoE control program 1203. In addition, the QoE control accounting program 1204 is run to preserve information, which signifies what quantity of resources is transferred between the systems A and B as a result of QoE control, in a QoE database 1205, and to arbitrate transfer of the incentive suitable for the quantity of resources.

Transfer of an incentive is performed between each of accounting servers 1211A and 1211B, which manage accounting information in the respective systems, and the integration gateway 1201.

The accounting server 1211A has a communication interface 1212 for use in communicating with the integration gateway 1201 or the accounting server 1211B of the other system. In addition, the accounting server 1211A includes a processor 1213 that not only performs ordinary accounting processing but also handles an incentive to be transferred between the systems, a cache memory 1214, a memory 1215, and a database 1217 that holds information on the incentive.

EP 2 389 034 B1

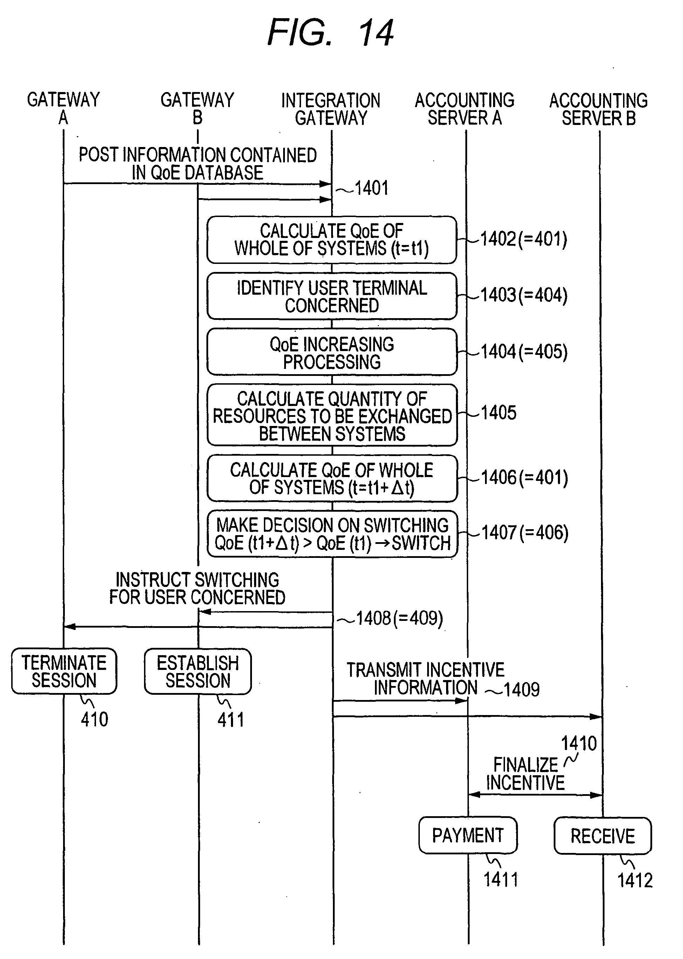

Fig. 14 describes accounting processing and arbitration for transfer of an incentive which are performed by the integration gateway.

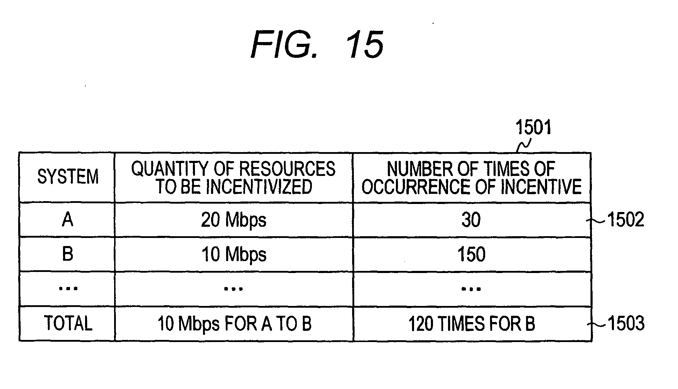

Information contained in the QoE database is acquired from the gateway included in each of the systems (1401). The database has the same structure as the table 903 shown in Fig. 9 does, and contains both a communicating state for each session and a QoE value. Thereafter, the QoE control program 1203 included in the integration gateway 1201 calculates a QoE for the whole of plural systems (1402), identifies a user whose movement or QoE is the smallest (1403), and performs QoE increasing processing to see if the user can switch the systems (1404). The QoE for the whole of the systems is re-calculated (1406), and whether the user concerned should switch the systems is decided (1407). A switching instruction is then issued (1408). The contents of the series of steps are identical to those described in relation to the first embodiment in conjunction with Fig. 4, Fig. 5, or Fig. 6. If the connecting-destination system of the user terminal is switched from one system to another, resources are transferred between the systems. The QoE control accounting program 1204 calculates a quantity of resources to be transferred between the systems, or the number of times by which one system provides the other system with resources, and contains it in the database 1205. Pieces of information contained in the database are those shown in Fig. 15. A quantity of resources to be incentivized corresponds to a quantity of resources actually allocated to the other system out of a quantity D of surplus resources. Otherwise, from which system to which system resources are supplied, and the number of times by which resources are supplied are recorded. More particularly, when the QoE control program 1203 issues a switching instruction at step 410 in Fig. 4, the QoE control accounting program identifies the connecting-destination systems to which the user terminal has been connected before switching of the systems and is connected after the switching, specifies the expression (2) according to an application used by the user terminal for a session, and calculates as a difference $\Delta$ between the sums of QoE values for the respective systems which are compared with each other at step 406.

The integration gateway 1201 cyclically comprehends the pieces of information (for example, daily, weekly, or monthly), references data items 1502 contained in the database so as to calculate how many resources are supplied from a certain system to another system, and how many times the resources are supplied, and contains the calculated data items as data items 1503.

The pieces of information on incentives are transmitted from the integration gateway 1201 to the accounting servers 1211A and 1211B of the respective wireless systems (1409). The pieces of information to be transmitted may be the data items 1502 relevant to incentives given to the respective systems, or the data items 1503 obtained by the integration gateway. Each of the accounting servers 1211A and 1211B adds the pieces of information to the incentive database 1217, calculates the sum of incentives, which is paid from one system to the other system, at predetermined intervals (for example, daily, weekly, or monthly), and finalizes the information together with the other accounting server (1410). Based on the result of the finalization, incentive payment work 1411 and incentive receiving work 1412 are carried out.

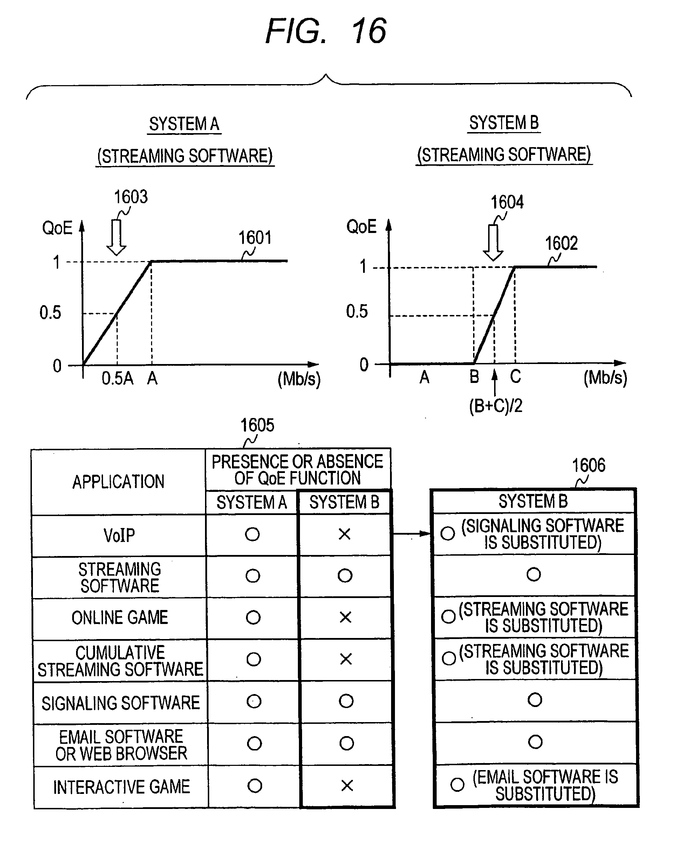

Assuming that the wireless system A and wireless system B are operated by different companies, there is a possibility that the number of qualities of experience to be supported or the forms of QoE functions are different between the systems. Therefore, the gateway 1201 owned by the MVNO may match the different qualities of experience with each other. For this purpose, first, information on the QoE functions supported by each of the systems is contained in a message 1401 with which pieces of information retrieved from the QoE database are posted from the gateway included in the system. Matching the qualities of experience is performed by the QoE control program 1203 in the integration gateway 1201. Fig. 16 shows a concrete example of matching. For example, assume that systems A and B support QoE functions 1601 and 1602 respectively for streaming software, and the QoE functions are different from each other. In this case, a user to which a resource providing a throughput 0.5A (Mb/s) and meeting a QoE of 0.5 is allocated within the system A has a resource, which provides a throughput (B+C)/2 (Mb/s) and meets the QoE of 0.5, allocated thereto within the system B. Thus, a relationship of association is established between the different QoE functions. More particularly, when the QoE control program 1203 calculates a QoE value for each session at steps 401, 405, and 412 described in Fig. 4 or performs the calculation using QoE functions as described in Fig. 6, the QoE control program 1203 uses the QoE functions (expression (2)) supported by a wireless system employed in the communication of the session.

As another example of matching, a case where the number of QoE functions capable of being supported is different between the systems A and B will be discussed below. Prior to the matching, as seen from a table 1605, the number of QoE functions supported by the system A is larger than the number of QoE functions supported by the system B. In this case, the system B assigns any of the QoE functions, which characterize applications and which the system B currently supports, as a QoE function that characterizes the application which the system A alone supports. Thus, a relationship of association is established between the systems (1606).

A third embodiment of the present invention will be described below.

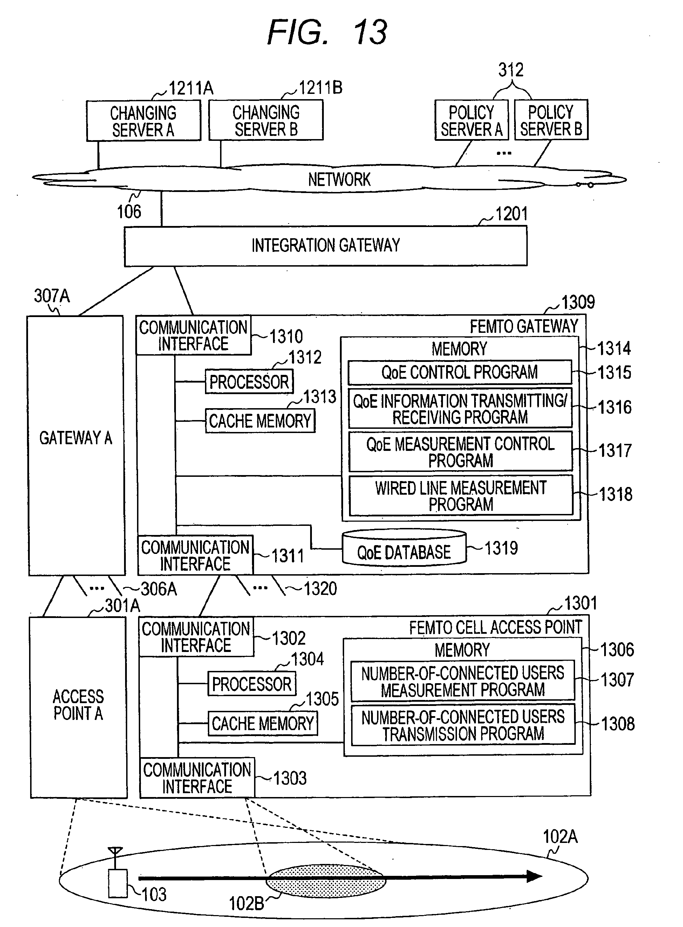

In relation to the third embodiment, a case where an access point is a femtocell base station will be discussed. Fig. 13 shows an example of a system configuration devised in consideration of the femtocell base station.

The femtocell base station covers a narrow service area and is supposed to be installed at home. The number of users connected to one femtocell base station is therefore small. Since the femtocell base station is inexpensively provided, facilities to be incorporated are limited.

A femtocell base station 1301 includes a number-of-connected users transmitting program 1308 that transmits information on the number of users connected subordinately, and a number-of-connected users measurement program 1307 that measures the number of connected users.

A femto-gateway 1309 that is an upper-level station calculates a QoE value for each session. A QoE measurement control program 1317 of the femto-gateway 1309 measures a quantity of traffic flowing over a line between the femto-gateway and femtocell base station 1301 or a variation in the quantity of traffic, divides the quantity of traffic by the number of sessions established with the femtocell base station, and thus calculates a QoE for each session.

The QoE control program 1315 executes the QoE control flow, which has been described in relation to the first embodiment in conjunction with Fig. 4, Fig. 5, or Fig. 6, using the quality of user experience calculated according to an expression (3).

```
QoE for each session = {α×f(QoE(quantity of traffic per

unit time) + β×f(QoE(packet loss ratio per unit time) +

γ×f(QoE(packet transmission delay time) + ···} ÷ (number of

sessions established with a femtocell base station   (3)
```

This obviates the necessity of a QoE measurement facility in the femtocell base station.

The femtocell base station is characterized in that it neither receives information based on a QoE from the gateway nor implements the control based on the QoE. This is because the number of users to be managed subordinately to the femtocell base station is small, and the number of candidates for resources to be released or allocated is small.

Incidentally, the present embodiment has been described by taking the femtocell base station for instance. However, the present invention is not limited to the femtocell base station, but can be adapted to an inexpensive base station and a base station of a wireless system devoid of the QoE control facility.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

**Claims**

1. A wireless communication system comprising:

   a first access point (301A);
   a gateway (307A) connected to the first access point (301A); and
   a user terminal (103), wherein
   the gateway (307A) is adapted to calculate a first value that is a sum of quality of experience (QoE) values for all sessions established by the user terminal and other user terminals with the first access point (301A) and a second access point (301B), which is included in another wireless communication system (102B), in case the user terminal (103) communicates via the first access point (301A), and a second value that is a sum of QoE values for all sessions established by the user terminal and the other user terminals with the first access point (301A) and the second access point (301B) in case the user terminal (103) communicates via the second access point. (301B),
   , wherein when the user terminal (103) communicates via the first access point (301A), if the second value is larger than the first value, the gateway (307A) posts a switching instruction to the another wireless communication system (102B) so that the user terminal (103) communicates via the second access point (301B).

2. The wireless communication system according to Claim 1, wherein QoE functions for use in calculating the QoE value vary depending on an application.

3. The wireless communication system according to at least one of Claims 1 to 2, wherein the user terminal (103) is adapted to select a session, the QoE value for which is the smallest, among those established over the wireless communication system (102A).

4. The wireless communication system according to at least one of Claims 1 to 3, wherein the access point (301A) or gateway (307A) is adapted to calculate the QoE value for each session, and to transmit the calculated QoE value for each session to a wireless communication system (102B) that is a moving destination of the user terminal (103).

5. The wireless communication system according to at least one of Claims 1 to 4, wherein the access point (301A) or gateway (307A) is adapted to use an existing protocol, which is employed in transmission of statistical information other than a QoE value, to post the QoE value.

6. The wireless communication system according to at least one of Claims 1 to 4, wherein the access point (301A) or gateway (307A) is adapted to use a protocol other than a protocol, which is employed in transmission of statistical information other than a QoE value, to transmit the QoE value.

7. The wireless communication system according to at least one of Claims 1 to 6, wherein the gateway (307A) is adapted to measure pieces of line information on a frequency band for a line leading to the subordinate access point, a delay time, a jitter, and others, and to calculate a quality of experience (QoE) according to a user's application and a resource allocated to the application on the basis of the number of users connected subordinately to the access point and the pieces of line information.

8. The wireless communication system according to at least one of Claims 1 to 7, wherein the gateway includes an accounting control program that is adapted to, when the fact that the connecting-destination system of the user terminal is changed from one system to another has been notified, calculate a change in a magnitude of a resource to be allocated to the user terminal.

9. The wireless communication system according to at least one of Claims 1 to 8, wherein the gateway (307A) is adapted to be operated by a company different from a company that operates the wireless system (102A) including devices subordinate thereto.

10. The wireless communication system according to Claim 8, wherein when QoE control is implemented over a plurality of wireless systems, the wireless systems are adapted to handle an incentive according to release or allocation of resources, and to include an accounting facility for performing accounting according to a quantity of resources released or allocated.

11. A gateway included in a wireless communication system comprising a first access point (301A), the gateway (307A) connected to the access point (301A), and a user terminal (103) compatible with the wireless communication system, which serves as a first wireless system (102A), and a second wireless system (102B) different from the first wireless system (102A), wherein:

the gateway (307A) is adapted to calculate a quality of experience (QoE) for all sessions established by the user terminal and other user terminals (103) on the basis of corresponding applications used by the user terminals (103) and corresponding resources allocated thereto;
the gateway (307A) is adapted to calculate a first value that is a sum of QoE values for all sessions established by the user terminal and other user terminals with the first access point (301A) and a second access point (301B), which is included in the second wireless system (102B), in case the terminal (103) communicates via the first access point (301A), and a second value that is a sum of all QoE values for sessions established by the user terminal and other user terminals with the first access point (301A) and second access point (301B) in case the user terminal (103) communicates via the second access point (301B), and
when the terminal (103) communicates via the first access point (301A), if the second value is larger than the first value, the gateway (307A) is adapted to post a switching instruction to the second wireless system (102B) so that the terminal (103) communicates via the second access point (301B).

12. The gateway according to Claim 11, wherein the gateway (307A) includes an interface (319A) adapted to post QoE information to a gateway (307B) included in the second wireless system (102B) or receive QoE information from the gateway (307B) of the second wireless system (102B).

13. The gateway according to Claim 12, wherein as an interface (319A) adapted to post QoE information to the gateway (307B) of the second wireless system (102B) or receive QoE information from the gateway (307B) of the second wireless system (102B), an interface (1102, 1103) conformable to the Network Configuration protocol NETCONF or Simple Network Management Protocol SNMP is adopted.

14. The gateway according to Claim 12 or 13, wherein the gateway (307A) has a plurality of interfaces (319A, 1102, 1103) such as an interface adapted to post QoE information to the gateway (307B) of the second wireless system (102B) or receive QoE information from the gateway (307B) of the second wireless system (102B), and an interface adapted to post or receive other statistical information or operating information.

**Patentansprüche**

1. Drahtloses Kommunikationssystem mit:

   einem ersten Zugangspunkt (301A);
   einem Gateway (307A), das mit dem ersten Zugangspunkt (301A) verbunden ist; und
   einem Benutzerendgerät (103), wobei
   das Gateway (307A) dazu ausgelegt ist, einen ersten Wert zu berechnen, der eine Summe von Erfahrungsqualität- (quality of experience, QoE) -Werten für alle Sitzungen ist, die von dem Benutzerendgerät und anderen Benutzerendgeräten mit dem ersten Zugangspunkt (301A) und einem zweiten Zugangspunkt (301B) hergestellt werden, der in einem anderen drahtlosen Kommunikationssystem (102B) beinhaltet ist, falls das Benutzerendgerät (103) über den ersten Zugangspunkt (301A) kommuniziert, und einen zweiten Wert zu berechnen, der eine Summe von QoE-Werten für alle Sitzungen ist, die von dem Benutzerendgerät und den anderen Benutzerendgeräten mit dem ersten Zugangspunkt (301A) und dem zweiten Zugangspunkt (301B) hergestellt werden, falls das Benutzerendgerät (103) über den zweiten Zugangspunkt (301B) kommuniziert, wobei, wenn das Benutzerendgerät (103) über den ersten Zugangspunkt (301A) kommuniziert, falls der zweite Wert größer als der erste Wert ist, das Gateway (307A) eine Schaltanweisung an das andere drahtlose Kommunikationssystem (102B) sendet, so dass das Benutzerendgerät (103) über den zweiten Zugangspunkt (301B) kommuniziert.

2. Drahtloses Kommunikationssystem nach Anspruch 1, wobei QoE-Funktionen zur Verwendung bei der Berechnung des QoE-Werts in Abhängigkeit von einer Anwendung variieren.

3. Drahtloses Kommunikationssystem nach mindestens einem der Ansprüche 1 bis 2, wobei das Benutzerendgerät (103) dazu ausgelegt ist, unter denjenigen Sitzungen, die über das drahtlose Kommunikationssystem (102A) hergestellt werden, eine Sitzung auszuwählen, für welche der QoE-Wert der kleinste ist.

4. Drahtloses Kommunikationssystem nach mindestens einem der Ansprüche 1 bis 3, wobei der Zugangspunkt (301A) oder das Gateway (307A) dazu ausgelegt ist, den QoE-Wert für jede Sitzung zu berechnen und den berechneten QoE-Wert für jede Sitzung an ein drahtloses Kommunikationssystem (102B) zu übertragen, das ein bewegliches Ziel des Benutzerendgeräts (103) ist.

5. Drahtloses Kommunikationssystem nach mindestens einem der Ansprüche 1 bis 4, wobei der Zugangspunkt (301A) oder das Gateway (307A) dazu ausgelegt ist, ein vorhandenes Protokoll heranzuziehen, das bei der Übertragung anderer statistischer Information als eines QoE-Werts verwendet wird, um den QoE-Wert zu senden.

6. Drahtloses Kommunikationssystem nach mindestens einem der Ansprüche 1 bis 4, wobei der Zugangspunkt (301A) oder das Gateway (307A) dazu ausgelegt ist, ein anderes Protokoll als ein Protokoll heranzuziehen, das bei der Übertragung anderer statistischer Information als eines QoE-Werts verwendet wird, um den QoE-Wert zu übertragen.

7. Drahtloses Korümunikationssystem nach mindestens einem der Ansprüche 1 bis 6, wobei das Gateway (307A) dazu ausgelegt ist, Leitungsinformationen über ein Frequenzband für eine Leitung, die zu dem untergeordneten Zugangspunkt führt, eine Verzögerungszeit, einen Jitter und andere zu messen, und eine Erfahrungsqualität (QoE) gemäß der Anwendung eines Benutzers und einer Ressource zu berechnen, die der Anwendung auf der Grundlage der Anzahl von Benutzern, die untergeordnet mit dem Zugangspunkt verbunden sind, und der Leitungsinformationen zugeteilt ist.

8. Drahtloses Kommunikationssystem nach mindestens einem der Ansprüche 1 bis 7, wobei das Gateway ein Rechnungsprüfungsprogramm beinhaltet, das dazu ausgelegt ist, eine Änderung einer Größe einer Ressource zu berechnen, die dem Benutzerendgerät zugeteilt werden soll, wenn die Tatsache mitgeteilt worden ist, dass das Verbindungszielsystem des Benutzerendgeräts von einem System zu einem anderen gewechselt hat.

9. Drahtloses Kommunikationssystem nach mindestens einem der Ansprüche 1 bis 8, wobei das Gateway (307A) dazu ausgelegt ist, von einer Firma betrieben zu werden, die sich von einer Firma unterscheidet, die das drahtlose System (102A) einschließlich Vorrichtungen betreibt, die diesem untergeordnet sind.

10. Drahtloses Kommunikationssystem nach Anspruch 8, wobei, wenn eine QoE-Steuerung über mehrere drahtlose Systeme umgesetzt wird, die drahtlosen Systeme dazu ausgelegt sind, einen Leistungsanreiz nach Maßgabe einer Freisetzung oder Zuteilung von Ressourcen zu handhaben und eine Rechnungsprüfungseinrichtung zum Durchführen einer Rechnungsprüfung nach Maßgabe einer Menge von freigesetzten oder zugeteilten Ressourcen zu beinhalten.

11. Gateway, das in einem drahtlosen Kommunikationssystem beinhaltet ist, das einen ersten Zugangspunkt (301A), wobei das Gateway (307A) mit dem ersten Zugangspunkt (301A) verbunden ist, und ein Benutzerendgerät (103), das mit dem drahtlosen Kommunikationssystem kompatibel ist, das als erstes drahtloses System (102A) dient, und ein zweites drahtloses System (102B) umfasst, das sich von dem ersten drahtlosen System (102A) unterscheidet, wobei:

das Gateway (307A) dazu ausgelegt ist, eine Erfahrungsqualität (QoE) für alle Sitzungen zu berechnen, die von dem Benutzerendgerät und anderen Benutzerendgeräten auf der Grundlage entsprechender Anwendungen hergestellt werden, die von den Benutzerendgeräten (103) und diesen zugeteilten entsprechenden Ressourcen verwendet werden;

das Gateway (307A) dazu ausgelegt ist, einen ersten Wert zu berechnen, der eine Summe von QoE-Werten für alle Sitzungen ist, die von dem Benutzerendgerät und anderen Benutzerendgeräten mit dem ersten Zugangspunkt (301A) und einem zweiten Zugangspunkt (301B) hergestellt werden, der in dem zweiten drahtlosen System (102B) beinhaltet ist, falls das Endgerät (103) über den ersten Zugangspunkt (301A) kommuniziert, und einen zweiten Wert zu berechnen, der eine Summe aller QoE-Werte für Sitzungen ist, die von dem Benutzerendgerät und anderen Benutzerendgeräten mit dem ersten Zugangspunkt (301A) und dem zweiten Zugangspunkt (301B) hergestellt werden, falls das Benutzerendgerät über den zweiten Zugangspunkt (301B) kommuniziert, und

wenn das Endgerät (103) über den ersten Zugangspunkt (301A) kommuniziert, falls der zweite Wert größer als der erste Wert ist, das Gateway (307A) dazu ausgelegt ist, eine Schaltanweisung an das zweite drahtlose System (102B) zu senden, so dass das Endgerät (103) über den zweiten Zugangspunkt (301B) kommuniziert.

12. Gateway nach Anspruch 11, wobei das Gateway (307A) eine Schnittstelle (319A) beinhaltet, die dazu ausgelegt ist, QoE-Information an ein Gateway (307B) zu senden, das in dem zweiten drahtlosen System (102B) beinhaltet ist, oder QoE-Information von dem Gateway (307B) des zweiten drahtlosen Systems (102B) zu empfangen.

13. Gateway nach Anspruch 12, wobei als Schnittstelle (319A), die dazu ausgelegt ist, QoE-Information an das Gateway (307B) des zweiten drahtlosen Systems (102B) zu senden oder QoE-Information von dem Gateway (307B) des zweiten drahtlosen Systems (102B) zu empfangen, eine Schnittstelle (1102, 1103) übernommen wird, die an das Network-Configuration-Protokoll NETCONF oder das Simple-Network-Management-Protokoll SNMP angepasst werden kann.

14. Gateway nach Anspruch 12 oder 13, wobei das Gateway (307A) mehrere Schnittstellen (319A, 1102, 1103) aufweist, wie etwa eine Schnittstelle, die dazu ausgelegt ist, QoE-Information an das Gateway (307B) des zweiten drahtlosen Systems (102B) zu senden oder QoE-Information von dem Gateway (307B) des zweiten drahtlosen Systems (102B) zu empfangen, und eine Schnittstelle, die dazu ausgelegt ist, andere statistische Information oder Betriebsinformation zu senden oder zu empfangen.

**Revendications**

1. Système de communication sans fil comprenant :

un premier point d'accès (301A) ;
une passerelle (307A) connectée au premier point d'accès (301A) ; et

un terminal utilisateur (103), dans lequel

la passerelle (307A) est adaptée à calculer une première valeur qui est une somme de valeurs de qualité d'expérience (QoE) pour toutes les sessions établies par le terminal utilisateur et d'autres terminaux utilisateurs avec le premier point d'accès (301A) et un second point d'accès (301B) qui est inclus dans un autre système de communication sans fil (102B) dans le cas où le terminal utilisateur (103) communique avec le premier point d'accès (301A), et une seconde valeur qui est une somme des valeurs de QoE pour toutes les sessions établies par le terminal utilisateur et les autres terminaux utilisateurs avec le premier point d'accès (301A) et le second point d'accès (301B) dans le cas où le terminal utilisateur (103) communique avec le second point d'accès (301B), dans lequel quand le terminal utilisateur (103) communique via le premier point d'accès (301A), si la seconde valeur est plus grande que la première valeur, la passerelle (307A) envoie une instruction de commutation à l'autre système de communication sans fil (102B) de sorte que le terminal utilisateur (103) communique via le second point d'accès (301B).

2.  Système de communication sans fil selon la revendication 1, dans lequel les fonctions de qualité d'expérience (QoE) à utiliser lors du calcul des valeurs de QoE varient en dépendance d'une application.

3.  Système de communication sans fil selon l'une au moins des revendications 1 et 2, dans lequel le terminal utilisateur (103) est adapté à sélectionner, parmi les sessions établies via le système de communication sans fil (102A), une session pour laquelle la valeur de QoE est la plus faible.

4.  Système de communication sans fil selon l'une au moins des revendications 1 à 3, dans lequel le point d'accès (301A) ou la passerelle (307A) est adapté(e) à calculer la valeur de QoE pour chaque session, et à transmettre la valeur de QoE calculée pour chaque session à un système de communication sans fil (102B) qui est une destination en mouvement du terminal utilisateur (103).

5.  Système de communication sans fil selon l'une au moins des revendications 1 à 4, dans lequel le point d'accès (301A) ou la passerelle (307A) est adapté(e) à utiliser, pour transmettre la valeur de QoE, un protocole existant qui est employé pour la transmission d'informations statistiques autres qu'une valeur de QoE.

6.  Système de communication sans fil selon l'une au moins des revendications 1 à 4, dans lequel le point d'accès (301A) ou la passerelle (307A) est adapté(e) à utiliser, pour transmettre la valeur de QoE, un protocole autre qu'un protocole qui est employé pour la transmission d'informations statistiques autres qu'une valeur de QoE.

7.  Système de communication sans fil selon l'une au moins des revendications 1 à 6, dans lequel la passerelle (307A) est adaptée à mesurer des morceaux d'information en ligne sur une bande de fréquences pour une ligne menant au point d'accès subordonné, un temps de retard, une gigue [jitter], et autres, et à calculer une qualité d'expérience (QoE) en accord avec une application utilisateur et une ressource allouée à l'application sur la base du nombre d'utilisateurs connectés de manière subordonnée au point d'accès et aux morceaux d'information en ligne.

8.  Système de communication sans fil selon l'une au moins des revendications 1 à 7, dans lequel la passerelle inclut un programme de contrôle de comptabilité qui est adapté, quand le fait que le système de destination/connexion du terminal utilisateur est changé d'un système à un autre a été notifié, pour calculer un changement d'amplitude d'une ressource à allouer au terminal utilisateur.

9.  Système de communication sans fil selon l'une au moins des revendications 1 à 8, dans lequel la passerelle (307A) est adaptée à être exploitée par une compagnie différente d'une compagnie qui exploite le système sans fil (102A) incluant des dispositifs subordonnés à celui-ci.

10. Système de communication sans fil selon la revendication 8, dans lequel quand la commande de QoE est mise en oeuvre sur une pluralité de systèmes sans fil, les systèmes sans fil sont adaptés à traiter une incitation en accord avec la distribution ou l'allocation de ressources, et à inclure une facilité de comptabilité pour exécuter une comptabilité en accord avec une quantité de ressources distribuées ou allouées.

11. Passerelle incluse dans un système de communication sans fil comprenant un premier point d'accès (301A), la passerelle (307A) étant connectée au point d'accès (301A), et un terminal utilisateur (103) compatible avec le système de communication sans fil, qui sert de premier système sans fil (102A), et un second système sans fil (102B) différent du premier système sans fil (102A), dans laquelle :

la passerelle (307A) est adaptée à calculer une qualité d'expérience (QoE) pour toutes les sessions établies par le terminal utilisateur et

d'autres terminaux utilisateurs (103) sur la base d'applications correspondantes utilisées par les terminaux utilisateurs (103) et de ressources correspondantes allouées à ceux-ci ;

la passerelle (307A) est adapté à calculer une première valeur qui est une somme de valeurs de QoE pour toutes les sessions établies par le terminal utilisateur et d'autres terminaux utilisateurs avec le premier point d'accès (301A) et un second point d'accès (301B), qui est inclus dans le second système sans fil (102B) dans le cas où le terminal (103) communique via le premier point d'accès (301A), et une seconde valeur qui est une somme de toutes les valeurs de QoE pour des sessions établies par le terminal utilisateur et par d'autres terminaux utilisateurs avec le premier point d'accès (301A) et le second point d'accès (301B) dans le cas où le terminal utilisateur (103) communique via le second point d'accès (301B), et quand le terminal (103) communique via le premier point d'accès (301A), si la seconde valeur est plus grande que la première valeur, la passerelle (307A) est adaptée à envoyer une instruction de communication au second système sans fil (102B) de sorte que le terminal (103) communique via le second point d'accès (301B).

12. Passerelle selon la revendication 11, dans laquelle la passerelle (307A) inclut une interface (319A) adaptée à envoyer des informatisons de QoE à une passerelle (307B) incluse dans le second système sans fil (102B) ou à recevoir des informations de QoE depuis la passerelle (307B) du second système sans fil (102B).

13. Passerelle selon la revendication 12, dans laquelle une interface (1102, 1103) susceptible d'être conformée au protocole de configuration réseau NETCONF ou au protocole de gestion de réseau simple SNMP est adoptée à titre d'interface (319A) adaptée à envoyer des informations de QoE à la passerelle (307B) du second système sans fil (102B) ou à recevoir des informations de QoE de la passerelle (307B) du second système sans fil (102B).

14. Passerelle selon la revendication 12 ou 13, dans laquelle la passerelle (307A) possède une pluralité d'interfaces (319A, 1102, 1103), comme une interface adaptée à envoyer des informations de QoE à la passerelle (307B) du second système sans fil (102B) ou à recevoir des informations de QoE de la passerelle (307B) du second système sans fil (102B), et une interface adaptée à envoyer ou à recevoir d'autres informations statistiques ou d'autres informations d'exploitation.

# FIG. 1

# FIG. 2

201

| QoS CLASS | PRIORITY | DELAY TIME (ms) | PACKET LOSS RATIO | APPLICATION |
|---|---|---|---|---|
| 1 | 2 | 100 | $10^{-2}$ | VoIP |
| 2 | 4 | 150 | $10^{-3}$ | STREAMING SOFTWARE |
| 3 | 3 | 50 | $10^{-3}$ | ONLINE GAME |
| 4 | 5 | 300 | $10^{-6}$ | CUMULATIVE STREAMING SOFTWARE |
| 5 | 1 | 100 | $10^{-6}$ | SIGNALING SOFTWARE |
| 6 | 6 | 300 | $10^{-6}$ | EMAIL SOFTWARE OR WEB BROWSER |
| 7 | 7 | 100 | $10^{-3}$ | INTERACTIVE GAME |
| 8 | 8 | 300 | $10^{-6}$ | EMAIL SOFTWARE OR WEB BROWSER |
| 9 | 9 | | | |

EP 2 389 034 B1

# FIG. 3

# FIG. 4

```
         307A                              307B
          ~                                 ~
┌─────────────────────┐        ┌──────────────────────┐
│  MOVING-SOURCE      │        │  MOVING-DESTINATION  │
│    GATEWAY          │        │     GATEWAY          │
└─────────────────────┘        └──────────────────────┘
```

┌──────────────────────────────────────────────────────┐ 401
│  CALCULATE QoE OF WHOLE OF SYSTEMS (t=t1)             │ ⌐
└──────────────────────────────────────────────────────┘

┌ ─ ─ ─ ─ ─ ─ ─ ─ ─ ─ ─ ─ ─ ─ ┐ 402
│        MOVE TERMINAL          │ ⌐
└ ─ ─ ─ ─ ─ ─ ─ ─ ─ ─ ─ ─ ─ ─ ┘

                      403
SWITCH REQUEST         ~
──────────────────────────►

APPLICATION FOR TERMINAL
AND CURRENT QoE VALUE
──────────────────────────►

                    ┌──────────────────────────────┐ 404
                    │  SET QoE FOR GUARANTEEING     │ ⌐
                    │  TERMINAL-DESIRED QoE         │
                    └──────────────────────────────┘

┌──────────────────────────┐    ┌──────────────────────────┐ 405
│  QoE INCREASING FLOW     │    │  QoE INCREASING FLOW     │ ⌐
│  (TENTATIVE CALCULATION) │    │  (TENTATIVE CALCULATION) │
└──────────────────────────┘    └──────────────────────────┘

        TRANSMIT QoE VALUE      408
           OF SYSTEM            ~
        ◄──────────────────────►

┌──────────────────────────────────────────────────────┐ 412
│  CALCULATE QoE OF WHOLE OF SYSTEMS (t=t1+Δt)         │ ⌐
└──────────────────────────────────────────────────────┘

┌──────────────────────────────────────────────────────┐ 406
│         MAKE DECISION ON SWITCHING                    │ ⌐
│  QoE (t1+Δt) > QoE (t1) →SWITCH                      │
└──────────────────────────────────────────────────────┘

        RESULT OF DECISION      407
          ON SWITCHING          ~
        ◄──────────────────────►

┌ ─ ─ ─ ─ ─ ─ ─ ─ ─ ─ ─ ─ ┐ 409
│  INSTRUCT SWITCHING       │ ⌐
│    OF SYSTEMS             │
└ ─ ─ ─ ─ ─ ─ ─ ─ ─ ─ ─ ─ ┘

┌ ─ ─ ─ ─ ─ ─ ─ ─ ┐ 410   ┌ ─ ─ ─ ─ ─ ─ ─ ─ ─ ─ ─ ┐ 411
│ TERMINATE SESSION │ ⌐   │  ESTABLISH SESSION     │ ⌐
└ ─ ─ ─ ─ ─ ─ ─ ─ ┘       └ ─ ─ ─ ─ ─ ─ ─ ─ ─ ─ ─ ┘

# FIG. 5

307A
MOVING-SOURCE GATEWAY

307B
MOVING-DESTINATION GATEWAY

CALCULATE QoE OF WHOLE OF SYSTEMS (t=t1) 401

SELECT TERMINAL THAT GIVES SMALLEST QoE VALUE 501

403
SWITCH REQUEST
APPLICATION FOR TERMINAL AND CURRENT QoE VALUE

SET QoE FOR GUARANTEEING TERMINAL-DESIRED QoE 404

QoE INCREASING FLOW (TENTATIVE CALCULATION)

QoE INCREASING FLOW (TENTATIVE CALCULATION) 405

TRANSMIT QoE VALUE OF SYSTEM 408

CALCULATE QoE OF WHOLE OF SYSTEMS (t=t1+Δt) 401

MAKE DECISION ON SWITCHING
QoE (t1+Δt) > QoE (t1) →SWITCH 406

RESULT OF DECISION ON SWITCHING 407

INSTRUCT SWITCHING OF SYSTEMS 409

TERMINATE SESSION 410

ESTABLISH SESSION 411

## FIG. 6

START

ALLOCATE RESOURCES ACCORDING TO RADIO-WAVE SITUATIONS AND PRIORITIES GIVEN TO SESSIONS ESTABLISHED WITH SAME ACCESS POINT OR GATEWAY — 601

CLASSIFY USERS INTO SATISFACTORY USERS (QoE EQUAL TO OR LARGER THAN $\alpha$) AND UNSATISFACTORY USERS (QoE FALLING BELOW $\alpha$) — 602

CALCULATE SUM TOTAL D OF SURPLUS RESOURCES HELD BY SATISFACTORY USERS (SURPLUS RESOURCE IS DIFFERENCE FROM RESOURCE PERMITTING QoE = $\alpha$) — 603

WHILE (D > 0) & (IS UNSATISFACTORY USER PRESENT?) — 604

ALLOCATE RESOURCE $\Delta$ TO USER, WHO ENJOYS BEST RADIO-WAVE SITUATION AMONG UNSATISFACTORY USERS, SO THAT QoE BECOMES EQUAL TO $\alpha$ — 605

SUBTRACT SURPLUS RESOURCES OF SATISFACTORY USERS AT EQUAL RATIO (ASSUMING THAT SURPLUS RESOURCE OF CERTAIN SATISFACTORY USER IS d, d×$\Delta$/D IS SUBTRACTED FROM SURPLUS RESOURCE) — 606

D -= $\Delta$ — 607

END

# FIG. 7

EMAIL SOFTWARE

QoE

701

1

0                    A        (Mb/s)

STREAMING SOFTWARE

QoE

702

1

0        A    B    C    (Mb/s)

QoE

703

1
0.8
0.6
0.4
0.2
0

0              0.5              1

PACKET LOSS RATIO

QoE

704

1
0.8
0.6
0.4
0.2
0

0                    5

RESPONSE TIME (SEC)

# FIG. 8

# FIG. 9

901

| SESSION ID | APPLICATION | TRANSMISSION SPEED | DELAY TIME (ms) | PACKET LOSS RATIO |
|---|---|---|---|---|
| 1 | VOICE | 100 kbps | 100 | $10^{-2}$ |
| 2 | WEB | 3.0 Mbps | 150 | $10^{-3}$ |
| 3 | E-MAIL | 50 kbps | 50 | $10^{-3}$ |
| 4 | STREAMING | 500 kbps | 300 | $10^{-6}$ |
| ... | ... | ... | ... | ... |

902

| SESSION ID | APPLICATION | QoE VALUE | |
|---|---|---|---|
| 1 | VOICE | 1.0 | |
| 2 | WEB | 0.95 | |
| 3 | E-MAIL | 1.0 | |
| 4 | STREAMING | 0.80 | |
| ... | ... | ... | |
| TOTAL | TOTAL | a | ~904 |

903

| SESSION ID | APPLICATION | TRANSMISSION SPEED | DELAY TIME (ms) | PACKET LOSS RATIO | QoE VALUE | |
|---|---|---|---|---|---|---|
| 1 | VOICE | 100 kbps | 100 | $10^{-2}$ | 1.0 | |
| 2 | WEB | 3.0 Mbps | 150 | $10^{-3}$ | 0.95 | |
| 3 | E-MAIL | 50 kbps | 50 | $10^{-3}$ | 1.0 | |
| 4 | STREAMING | 500 kbps | 300 | $10^{-6}$ | 0.80 | |
| ... | ... | ... | ... | ... | ... | |
| TOTAL | | | | | a | ~904 |

## FIG. 10

EP 2 389 034 B1

# FIG. 11

# FIG. 12

CHARGING SERVER A — 1211A

PROCESSOR — 1213

CACHE MEMORY — 1214

MEMORY — 1215
INCENTIVE TRANSMITTING/ RECEIVING PROGRAM — 1216

CS B — 1211B

POLICY SERVER A — 312

PS B

COMMUNICATION INTERFACE — 324

INCENTIVE DATABASE — 1217

NETWORK

106

COMMUNICATION INTERFACE — 1206

INTEGRATION GATEWAY — 1201

PROCESSOR — 1208

CACHE MEMORY — 1209

MEMORY — 1210

QoE CONTROL PROGRAM — 1203

QoE INFORMATION TRANSMITTING/ RECEIVING PROGRAM — 1202

QoE CONTROL ACCOUNTING PROGRAM — 1204

COMMUNICATION INTERFACE — 1207

QoE DATABASE — 1205

COMMUNICATION INTERFACE    GATEWAY A — 307A

GATEWAY B — 307B

··· — 306A

ACCESS POINT A — 301A

··· — 301B

ACCESS POINT B

103

102B

102A

29

# FIG. 13

# FIG. 14

| GATEWAY A | GATEWAY B | INTEGRATION GATEWAY | ACCOUNTING SERVER A | ACCOUNTING SERVER B |
|---|---|---|---|---|

POST INFORMATION CONTAINED
IN QoE DATABASE

~1401

CALCULATE QoE OF
WHOLE OF SYSTEMS (t=t1) ~1402(=401)

IDENTIFY USER TERMINAL
CONCERNED ~1403(=404)

QoE INCREASING
PROCESSING ~1404(=405)

CALCULATE QUANTITY OF
RESOURCES TO BE EXCHANGED
BETWEEN SYSTEMS ~1405

CALCULATE QoE OF WHOLE
OF SYSTEMS (t=t1+△t) ~1406(=401)

MAKE DECISION ON SWITCHING
QoE (t1+△t) > QoE (t1) →SWITCH ~1407(=406)

INSTRUCT SWITCHING
FOR USER CONCERNED

~1408(=409)

TERMINATE
SESSION
410

ESTABLISH
SESSION
411

TRANSMIT INCENTIVE
INFORMATION ~1409

1410
FINALIZE
INCENTIVE

PAYMENT
1411

RECEIVE
1412

# FIG. 15

|  | | 1501 |
| SYSTEM | QUANTITY OF RESOURCES TO BE INCENTIVIZED | NUMBER OF TIMES OF OCCURRENCE OF INCENTIVE |
| --- | --- | --- |
| A | 20 Mbps | 30 |
| B | 10 Mbps | 150 |
| ... | ... | ... |
| TOTAL | 10 Mbps FOR A TO B | 120 TIMES FOR B |

1502

1503

# FIG. 16

SYSTEM A
(STREAMING SOFTWARE)

SYSTEM B
(STREAMING SOFTWARE)

| APPLICATION | PRESENCE OR ABSENCE OF QoE FUNCTION | | SYSTEM B |
|---|---|---|---|
| | SYSTEM A | SYSTEM B | |
| VoIP | ○ | × | ○ (SIGNALING SOFTWARE IS SUBSTITUTED) |
| STREAMING SOFTWARE | ○ | ○ | ○ |
| ONLINE GAME | ○ | × | ○ (STREAMING SOFTWARE IS SUBSTITUTED) |
| CUMULATIVE STREAMING SOFTWARE | ○ | × | ○ (STREAMING SOFTWARE IS SUBSTITUTED) |
| SIGNALING SOFTWARE | ○ | ○ | ○ |
| EMAIL SOFTWARE OR WEB BROWSER | ○ | ○ | ○ |
| INTERACTIVE GAME | ○ | × | ○ (EMAIL SOFTWARE IS SUBSTITUTED) |

**EP 2 389 034 B1**

**REFERENCES CITED IN THE DESCRIPTION**

**Patent documents cited in the description**

- JP 2007221318 A
- EP 1298951 A2
- WO 2007032601 A1